(19) Europäisches Patentamt
European Patent Office
Office européen des brevets

(11) **EP 4 478 077 A1**

(12) **DEMANDE DE BREVET EUROPEEN**

(43) Date de publication:
**18.12.2024 Bulletin 2024/51**

(51) Classification Internationale des Brevets (IPC):
**G01S 7/02** *(2006.01)*    **G01S 7/292** *(2006.01)*

(21) Numéro de dépôt: **24178473.5**

(52) Classification Coopérative des Brevets (CPC):
**G01S 7/021; G01S 7/2923**

(22) Date de dépôt: **28.05.2024**

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**GE KH MA MD TN**

(30) Priorité: **01.06.2023 FR 2305489**

(71) Demandeur: **Thales
92190 Meudon (FR)**

(72) Inventeurs:
• **ENDERLI, Cyrille
78852 ELANCOURT CEDEX (FR)**
• **LAVIEC, Philippe
29470 PLOUGASTEL DAOULAS (FR)**
• **LE REST, Thierry
29830 PLOUDALMEZEAU (FR)**

(74) Mandataire: **Atout PI Laplace
Immeuble Up On
25 Boulevard Romain Rolland
CS 40072
75685 Paris Cedex 14 (FR)**

(54) **SYSTÈME ET PROCÉDÉ DE RECONNAISSANCE DE FORME D'ONDE**

(57) Procédé de reconnaissance de forme d'onde d'un signal reçu d'un émetteur, comprenant des impulsions électromagnétiques en utilisant un modèle de forme d'onde selon un processus Markovien caché, comprenant un peigne de valeurs $\mu$ représentant des états de processus correspondant à des valeurs possibles d'un paramètre d'impulsion, une matrice P de transition entre les valeurs consécutives du peigne, et les écarts-types $\sigma$ de mesure des états, le procédé comprenant:
- la réception de N mesures du paramètre d'impulsion,
- la détermination d'un score, en parcourant (606) un arbre dont chaque noeud correspond à un des états de processus $\mu_k$ et fournissant une prédiction de mesure du paramètre d'impulsion,
- la reconnaissance de la forme d'onde du signal à partir du score,
le score étant mis à jour (607) itérativement, pour chaque noeud parcouru de l'arbre associé à un état de processus $\mu_k$ en fonction d'une précondition indiquant si la prédiction atteint une impulsion.

[Fig. 6]

Appliquer des coupures au nœud racine (601)

Parcourir le nœud racine pour initialiser S (602)

Explorer au moins l'une des branches partant du nœud racine (604)

Pour chaque branche parcourue (606)

Mettre à jour S à partir de la prédiction de mesure associé à l'état de processus de la feuille de la branche courante parcourue (607)

Autre branche à parcourir (608)?    Oui

Non

Retourner la valeur du score S (610)

**Figure 6**

## Description

Domaine technique

L'invention concerne de manière générale les systèmes radar et en particulier un dispositif et un procédé de reconnaissance de forme d'onde radar pseudo-aléatoire.

Certains systèmes radar connus utilisent un émetteur qui émet un signal comprenant une série d'impulsions électromagnétiques définissant une forme d'onde impulsionnelle pseudo-aléatoire du signal et un récepteur apte à recevoir le signal. L'émission d'un tel signal consiste à émettre des impulsions radar avec au moins un paramètre qui prend des valeurs aléatoires dans un ensemble de valeurs possibles.

Ce paramètre est généralement l'intervalle de temps entre des impulsions consécutives. Dans d'autre cas, le paramètre peut représenter la fréquence porteuse ou un autre paramètre caractéristique des impulsions, le temps différentiel d'arrivée pouvant indépendamment être pseudo-aléatoire ou déterministe.

La fonction de reconnaissance mis en oeuvre par le récepteur sous-entend de pouvoir reconnaître une forme d'onde déjà interceptée auparavant, même si elle n'est pas nécessairement identifiée c'est-à-dire qu'il ne lui est pas nécessairement associé de nom de radar, de porteur, et de type de fonction radar qu'elle exécute, ou encore qu'elle n'est pas renseignée dans une bibliothèque d'identification de formes d'onde.

Dans certains cas, la reconnaissance de forme d'onde peut être faite « à la volée », en même temps que les impulsions reçues sont désentrelacées et alimentent des pistes capteur - généralement dans des petites fenêtres temporelles d'analyse inférieures à la seconde, plutôt de l'ordre de 100 ms.

Diverses solutions connues ont abordé le problème de la reconnaissance de formes d'onde en tant que problème d'identification multi classes, notamment en utilisant un apprentissage machine tel qu'un apprentissage basé sur des réseaux neuronaux profonds.

Par exemple, l'identification peut être réalisée au niveau du signal en sortie du codeur analogique-numérique, comme décrit dans :

- P.M. Aashir Afnan. Et al. AI based radar waveform classification system. International research journal of engineering and technology 7(8):395-399. (Aug. 2020).
- J. Lunden. V. Koivunen. Automatic radar waveform récognition. IEEE J. selected topics SP 1(1):124-136. (June 2007).

Cependant, de telles approches sont complexes, requièrent une quantité de calculs importante et nécessitent de ré-entraîner les modèles quand une classe est ajoutée ou supprimée. D'autre part, les classifieurs multi classes sont structurellement incapables de traiter les cas où des formes d'onde non apprises sont présentées à leur entrée. Or, avec la prolifération des émetteurs et la généralisation des radars définis par logiciels, dont l'opérateur peut facilement modifier les paramétrages, il est requis de pouvoir gérer des formes d'onde hors bibliothèque de référence. Les solutions proposant des mécanismes *ad-hoc* en amont ou en aval du classifieur pour détecter une forme d'onde inconnue en entrée, basée sur des modèles d'apprentissage machine complémentaires au classifieur, comme divulgué par exemple dans les documents :

- C. Tanner Frediau. Et al. Classification of common waveforms including a watchdog for unkown signals. arXiv [eess.SP]:2108.07339v1. Aug 2021.
- R.V. Chakravarthy. Et al. Open-set radar waveform classification: Comparison of different features and classifiers. IEEE international radar conférence. Washington DC, USA. (28-30 April 2020).

Des méthodes les plus récentes sont également basées sur des réseaux neuronaux, comme par exemple W. Chao, et al. (dont ZML). A radar signal deinterleaving method based on semantic segmentation with neural networks. arXiv [eess.SP]:2110.13706v2. (Feb. 2022).

Néanmoins ces solutions connues restent limitées en raison de la quantité et de la diversité des formes d'onde inconnues.

D'autres approches connues adressent le problème de la reconnaissance de forme d'onde façon similaire pour des flots d'impulsions caractérisées, c'est-à-dire la plupart du temps comme un problème d'identification multi classes.

Une approche particulière a été proposée dans laquelle la distance de transport optimale est utilisée pour comparer les impulsions pré-triées avec une liste de candidats, comme divulgué par exemple dans :

- M.Mottier, G. Chardon, F. Pascal. Radar emitter classification with optimal transport distance. Proc. 30th European signal processing conférence (eusipco). Belgrade, Serbia. (29 Aug.-02 Sept. 2022).

Cette approche est cependant limitée aux paramètres de fréquence porteuse et de durée d'impulsion, ce qui est restrictif car un paramètre très signant des formes d'onde radar est la différence de temps entre impulsions consécutives (appelée PRI, acronyme pour « *pulse répétition interval* », encore appelé DTOA, acronyme pour « *differential time of arrival* », quand il est mesuré après interception par le récepteur d'écoute).

Le choix de la Période de Récurrence des Impulsions (PRI) est crucial dans la conception des systèmes radar, comme indiqué par exemple dans N. Levanon. E. Mozeson. Radar signals. Wiley. (2004). Pour la fonction radar, il est souvent souhaitable d'avoir une certaine régularité dans la PRI, mais pour des questions de discrétion et de lutte contre le brouillage il est plutôt préférable de définir de longues séquences de PRI sans répétition, entre autres contraintes (comme décrit par exemple dans US 5 847677A)). Les formes d'onde pseudo-aléatoires qui en résultent sont effet les plus difficiles à détecter et à reconnaître par un système d'écoute quand elles sont mélangées dans un flot d'impulsions provenant de différents émetteurs non séparés angulairement.

Un tel problème a été rarement abordé dans l'état de la technique en dépit de son intérêt opérationnel. Généralement, les approches d'identification sont basées sur les valeurs (moments) de PRI ou bien sur un intervalle de valeurs de PRI, déterminées après désentrelacement et pistage et comparées à une description en bibliothèque pour fournir un score de ressemblance. D'autres scores peuvent être calculés sur la base d'autres paramètres et les différents scores sont ensuite combinés pour former un score global et prendre une décision comme décrit dans EP3491411. Ce type d'approche nécessite une grande expertise pour la définition des scores et des modalités de combinaison de ces scores. Elle dépend notamment des qualités de désentrelacement et de pistage en amont, puisqu'elle nécessite suffisamment d'impulsions pré-regroupées sans trop d'erreurs pour produire un score suffisamment fiable, et ne peut donc pas toujours être appliquée « à la volée » dans des fenêtres d'analyse.

Une autre approche a été décrite dans H.E. Abou-Bakr-Hassan, K.H. Moustafa. Joint deinterleaving/identification of radar pulses using matrix différences. Proc. 5th international conférence on electrical engineering (ICEENG). Cairo, Egypt. (16-18 May 2006). Cette approche consiste à désentrelacer et identifier conjointement des formes d'onde constitutives d'un mélange. L'approche calcule avantageusement les différences de temps d'arrivée entre toutes les paires d'impulsions et associe entre elles les impulsions dont le DTOA est dans la liste des valeurs associées à une forme d'onde (pseudo-aléatoire ou régulière). Cependant, cette approche nécessite un très grand espace mémoire (un tableau de taille $N \times N$ avec N désignant le nombre d'impulsions dans la fenêtre d'analyse), et ne traite que le paramètre de DTOA sans considérations des autres paramètres caractérisant les impulsions. Elle est par ailleurs inefficace quand plusieurs formes d'onde ont des valeurs de PRI en commun ou bien en cas de manques importants d'impulsions. Une autre solution a été proposée dans EP1947472A pour identifier la présence ou l'absence d'une forme d'onde pouvant avoir une longue durée et une distribution d'énergie clairsemée. Cette solution porte sur le traitement de formes d'onde très particulières, aléatoires et très étalées dans le temps, avec une densité d'impulsion très faible. Un pré-filtrage sur le DTOA (et optionnellement sur la durée d'impulsion) permet de réduire le débit des impulsions reçues, puis des statistiques élémentaires sont calculées sur les rafales résiduelles pour déterminer si elles correspondent à la forme d'onde d'intérêt. Toutefois, les performances de l'approche sont basées sur les caractéristiques très particulières des formes d'onde recherchées et ne sont pas robustes à des situations plus denses.

Outres les limitations précitées, ces dernières approches tiennent compte seulement des valeurs de PRI (moments), avec d'autres paramètres éventuels, mais ne tiennent pas compte des enchaînements dans le temps des valeurs de PRI (ou autres paramètres) qui peuvent pourtant être une caractéristique utile à la reconnaissance des différentes formes d'onde pseudo-aléatoires en particulier lorsqu'elles sont mélangées, mitées, et avec relativement peu d'impulsions devant le nombre de moments possibles des valeurs de PRI (ou des autres paramètres). Enfin elles réalisent plutôt une fonction d'identification puisqu'elles requièrent une bibliothèque de référence a priori ; elles ne décrivent pas de moyen de s'en affranchir en apprenant localement un modèle statistique utile à la reconnaissance des formes d'onde plutôt que leur identification.

Ces solutions connues ne permettent pas de résoudre des problèmes qui se situe à un niveau plus en aval de la chaîne de réception où les impulsions sont d'abord détectées et caractérisées par un nombre restreint de paramètres (temps d'arrivée, fréquence porteuse, niveau, durée, azimut).

Un premier problème est de pouvoir reconnaître avec de bonnes performances une forme d'onde sachant que son caractère pseudo aléatoire implique des réalisations à chaque fois différentes de la suite de valeurs prises par les paramètres caractéristiques des impulsions dans les fenêtres tels que le nombre d'impulsions, le temps d'arrivée, la fréquence porteuse, ou la durée d'impulsion. Ces performances sont d'autant plus difficiles à atteindre que les fenêtres d'analyse ne contiennent relativement que peu d'impulsions de la forme d'onde à reconnaître en regard de sa variabilité, quand elle est présente, et qu'il est fréquent que certaines impulsions soient manquées pendant la réception. De plus, des impulsions parasites provenant d'autres émetteurs se mélangent généralement aux impulsions de la forme d'onde d'intérêt, soit parce que les traitements de désentrelacement/pistage sont imparfaits, soit parce que la reconnaissance à la volée doit se substituer partiellement à ces derniers.

Il est donc souhaitable que la probabilité d'erreur (probabilité de reconnaître à tort une suite d'impulsions comme contenant la forme d'onde d'intérêt) soit faible, tout en maximisant la probabilité de reconnaissance de la forme d'onde quand elle est présente dans la fenêtre d'analyse, de façon très incomplète et mélangée à des impulsions parasites.

Un autre problème est de pouvoir établir automatiquement, et à court terme (c'est-à-dire sur la zone d'opération pendant le temps d'une mission), un modèle probabiliste de la forme d'onde pseudo aléatoire d'intérêt qui permette de la reconnaître ultérieurement avec les difficultés citées.

Il existe ainsi un besoin pour un dispositif et un procédé de reconnaissance de forme d'onde amélioré.

Définition générale de l'invention

A cet effet, l'invention a pour objet un procédé de reconnaissance de la forme d'onde d'un signal reçu par un récepteur en provenance d'un émetteur, le signal comprenant une série d'impulsions électromagnétiques définissant une forme d'onde pseudo-aléatoire du signal. Avantageusement, le procédé comprend les étapes consistant à :

- déterminer un modèle de forme d'onde $\mathcal{M} = (\mu, P, \sigma)$ selon un processus Markovien caché, le modèle comprenant un vecteur $\mu \in \mathbb{R}^K$ représentant un peigne de valeurs, chaque valeur du peigne correspondant à un état de processus, les états de processus étant des valeurs possibles d'un paramètre d'impulsion donné associé aux impulsions, une matrice $P$ de transition entre les valeurs consécutives du peigne, la matrice de transition étant de taille $K \times K$, et un vecteur $\sigma \in \mathbb{R}^K$ comprenant un ensemble de coefficients représentant les écarts-types de mesure des états.

Le procédé comprend en outre les étapes consistant à :

- recevoir une suite datée ordonnée dans le temps de $N$ mesures ($x_i$) du paramètre d'impulsion donné,
- déterminer un score, en parcourant un arbre comprenant un ensemble de branches, les branches comprenant un ensemble de noeuds, chaque noeud de l'arbre correspondant à un des états de processus $\mu_k$ et fournissant une prédiction de mesure ($\bar{x}_i$) du paramètre d'impulsion, les branches de l'arbre étant parcourues selon un ordre choisi, l'arbre ayant une profondeur inférieure ou égale à N,
- reconnaître la forme d'onde à partir du score.

La détermination d'un score comprend une ou plusieurs itérations des étapes suivantes, pour chaque noeud parcouru de l'arbre associé à un état de processus $\mu_k$ :

- déterminer une prédiction $\hat{x}_i$ du paramètre d'impulsion à partir de la prédiction du paramètre d'impulsion $\hat{x}_{i-1}$ déterminée à l'itération précédente et de l'état de processus $\mu_k$ associé au noeud,
- déterminer si une précondition est vérifiée indiquant que la prédiction $\hat{x}_i$ atteint une impulsion,
- mettre à jour la valeur courante du score, si la précondition est vérifiée, en incrémentant la valeur courante du score $S$ d'une valeur,
- sélectionner la branche suivante à parcourir,

les itérations étant répétées jusqu'à ce qu'une condition d'arrêt soit vérifiée.

Dans un mode de réalisation le procédé comprend l'incrémentation d'un compteur de manques si la précondition n'est pas vérifiée.

En particulier, le parcours de l'arbre peut remonter à un niveau supérieur de l'arbre si le compteur de manques atteint une valeur maximale de manques prédéfinie.

Dans un mode de réalisation, la précondition est vérifiée si :

$$\min_n \frac{|x_n - \hat{x}_i|}{\sigma_k} \leq t,$$

$\sigma_k$ désignant l'écart-type de mesure du paramètre d'impulsion et t désigne un seuil ajustable.

Dans un mode de réalisation, le score calculé peut désigner la vraisemblance maximale des mesures ($x_n$) conditionnellement au modèle $\mathcal{M}$.

Dans des modes de réalisation, le score peut être mis à jour à l'étape de mise à jour de score en ajoutant à la valeur courante du score

la quantité $\frac{1}{\sigma_k\sqrt{2\pi}}\exp\left(-\min_n \frac{|x_n - \hat{x}_i|^2}{2\sigma_k^2}\right)$ ou la quantité $\exp\left(-\min_n \frac{|x_n - \hat{x}_i|^2}{2\sigma_k^2}\right)$. Alternativement, le score peut être mis à jour à l'étape de mise à jour de score en incrémentant la valeur courante du score.

Dans des modes de réalisation, le procédé peut être réitéré *I* fois si le score obtenue à l'étape de détermination de score est inférieur à une valeur de score prédéfinie, en initialisant la prédiction à la *I* + 1 ième mesure du paramètre d'impulsion.

Selon un aspect de l'invention, l'arbre peut être parcouru en profondeur ou en largeur.

Dans des modes de réalisation, la condition d'arrêt est vérifiée lorsque toutes les branches de l'arbre ont été parcourues ou si la valeur du score mise à jour est supérieure à un seuil de valeur de seuil S.

Le procédé peut en outre comprendre un apprentissage du modèle à partir de données de référence, les étapes d'apprentissages comprenant les étapes consistant à :

- filtrer les données de référence ;
- déterminer le nombre d'états de processus ;
- déterminer les valeurs des états de processus ;
- le nombre d'états de processus et les valeurs des états de processus étant déterminées à partir des données de référence filtrées ;
- le procédé comprenant en outre la détermination de la matrice de transition P et des écart-types de mesures des états, à partir du nombre d'état de processus et des valeurs des états de processus.

Dans un mode de réalisation, les données de référence sont utilisées pour mettre à jour un histogramme représentant en ordonnée le nombre d'impulsions détectées en fonction d'un indice intervalle en abscisses, la largeur d'un intervalle étant égale à une résolution temporelle, tel que :

- le nombre d'états $\mu$ correspond au nombre de composantes connexes de l'histogramme de cardinal au moins égal à une valeur donnée, sur son axe des abscisses, une composante connexe correspondant à un nombre d'intervalles consécutifs contenant un nombre non nul d'impulsions dans l'histogramme, le nombre d'intervalles d'une composante connexe définissant le cardinal de la composante connexe ;
- la valeur des états de processus est estimée en déterminant la valeur médiane des centres des intervalles associés chaque composante connexe, chaque valeur médiane fournissant la valeur d'un des $K$ états $\mu_k$ du peigne $\mu$.

Le procédé peut comprendre en outre l'application d'un procédé d'optimisation pour optimiser les estimations obtenues du vecteur $\mu$, de la matrice de transition $P$, et de l'écart-type $\sigma$, l'algorithme d'optimisation étant initialisé avec les valeurs estimées $\mu$, $P$, et $\sigma$, l'algorithme d'optimisation étant apte à estimer conjointement les paramètres $\mu$, $P$, et $\sigma$ de façon itérative et optimale au sens du maximum de vraisemblance.

Dans un mode de réalisation, le procédé comprend une correction des prédictions $\hat{x}_i$ en les recentrant sur l'impulsion atteinte par la prédiction, en réponse à la vérification de la précondition.

Le procédé peut comprendre la mise à jour d'un compteur d'atteintes de prédiction, le compteur étant incrémenté en réponse à la vérification de la précondition, le procédé comprenant en outre une ré-estimation conjointe des prédictions successives après un nombre donné du compteur d'atteinte de prédiction.

Il est en outre proposé un récepteur de reconnaissance de la forme d'onde d'un signal reçu en provenance d'un émetteur, le signal comprenant une série d'impulsions électromagnétiques définissant une forme d'onde pseudo-aléatoire du signal, caractérisé en ce que le récepteur comprend une unité de reconnaissance de forme d'onde configurée pour:

- déterminer un modèle de forme d'onde $\mathcal{M}$ = ($\mu$, $P$, $\sigma$) selon un processus Markovien, le modèle comprenant un vecteur $\mu \in \mathbb{R}^K$ représentant un peigne de valeurs, chaque valeur du peigne correspondant à un état de processus, les états de processus étant des valeurs possibles d'un paramètre d'impulsion donné associé aux impulsions, une matrice P de transition entre les valeurs consécutives du peigne, la matrice de transition étant de taille $K \times K$, et un vecteur $\sigma \in \mathbb{R}^K$ $\sigma$ comprenant un ensemble de coefficients représentant les écarts-types de mesure des états.

Avantageusement, l'unité de reconnaissance de forme d'onde peut être configurée pour :

- recevoir une suite datée ordonnée dans le temps de $N$ mesures ($x_i$) du paramètre d'impulsion donné,
- déterminer un score, en parcourant un arbre comprenant un ensemble de branches, les branches comprenant un ensemble de noeuds, chaque noeud de l'arbre correspondant à un des états de processus $\mu_k$ et fournissant une prédiction de mesure ($\overline{x}_i$) du paramètre d'impulsion, les branches de l'arbre étant parcourues selon un ordre choisi, l'arbre ayant une profondeur inférieure ou égale à N,
- reconnaître la forme d'onde à partir du score,

la détermination d'un score comprenant une ou plusieurs itérations des étapes suivantes, pour chaque noeud parcouru de l'arbre associé à un état de processus $\mu_k$ :

- déterminer une prédiction $\hat{x}_i$ du paramètre d'impulsion à partir de la prédiction du paramètre d'impulsion $\hat{x}_{i-1}$ déterminée à l'itération précédente et de l'état de processus $\mu_k$ associé au noeud ;
- déterminer si une précondition est vérifiée indiquant que la prédiction $\hat{x}_i$ atteint une impulsion,
- mettre à jour la valeur courante du score, si la précondition est vérifiée, en incrémentant la valeur courante du score $S$ d'une valeur,
- sélectionner la branche suivante à parcourir,

les itérations étant répétées jusqu'à ce qu'une condition d'arrêt soit vérifiée.

Brève Description des Figures

D'autres caractéristiques, détails et avantages de l'invention ressortiront à la lecture de la description faite en référence aux dessins annexés donnés à titre d'exemple et qui représentent, respectivement :

[Fig.1] - La figure 1 représente un exemple de système de détection dans lequel au moins un récepteur comprend un dispositif de reconnaissance de forme d'onde, selon des modes de réalisation de l'invention.
[Fig.2] - La figure 2 est un diagramme de valeurs de différences de temps d'arrivée (DTOAs) entre des impulsions consécutives d'un radar pseudo-aléatoire.
[Fig.3] - La figure 3 est un histogramme de valeurs de DTOAs correspondant à la figure 2, selon un exemple de réalisation de l'invention dans lequel les impulsions sont émises par un radar naval intercepté en mer.
[Fig.4] - La figure 4 est un exemple de matrice de transition P estimée associée aux DTOAs de la figure 3.
[Fig.5] - La figure 5 représente la structure du dispositif de reconnaissance de forme d'onde selon des modes de réalisation de l'invention.
[Fig.6] - La figure 6 est un organigramme représentant le procédé de calcul de score à partir du parcours d'un arbre de décision, selon des modes de réalisation.
[Fig.7] - La figure 7 illustre l'étape préliminaire de calcul pour initialiser le calcul du score par parcours d'un arbre, dans le cas où le paramètre d'impulsion est un paramètre de type différentiel tel que le DTOA.
[Fig.8] - La figure 8 illustre la première itération des étapes de calcul de score du procédé de la figure 6, dans le cas d'un paramètre d'impulsion différentiel de type DTOA.
[Fig.9] - La figure 9 illustre le meilleur parcours d'arbre quand le procédé de la figure 6 est appliqué aux données des figures 2 et 3, dans une fenêtre d'analyse.

[Fig.10] - La figure 10 illustre le procédé d'apprentissage du modèle $\mathcal{M} = (\mu, P, \sigma)$, à partir de données de référence, selon des modes de réalisation de l'invention.
[Fig.11] - La figure 11 représente un agrandissement d'un histogramme H autour des premiers modes du DTOA, dans l'exemple des données des figures 2 et 3 correspondant à un paramètre d'impulsion de type DTOA.
[Fig.12] - La figure 12 représente différentes Probabilité de Fausse Alarme en fonction du seuil de score pour différentes valeurs du paramètre $\lambda$ lié à la densité temporelle d'impulsions dans l'environnement du récepteur.
[Fig.13] - la figure 13 représente la valeur du seuil de score (en ordonnée) en fonction de $\lambda$ (en abscisses) pour différentes Probabilités de Fausse Alarme.
[Fig.14] - La figure 14 illustre la probabilité de reconnaissance de la forme d'onde d'intérêt mélangée à un processus de Poisson, en fonction du taux de mitage.
[Fig.15] - La figure 15 illustre les résultats du procédé de reconnaissance de forme d'onde appliqué à des données réelles.
[Fig.16] - La figure 16 représente les niveaux des impulsions dans une fenêtre où la reconnaissance est positive.
[Fig.17] - La figure 17 illustre les DTOAs des impulsions extraites au cours de la reconnaissance de forme d'onde (données réelles).
[Fig.18] - La figure 18 est un agrandissement (zoom) en ordonnée de la figure 17.

Description détaillée de la demande

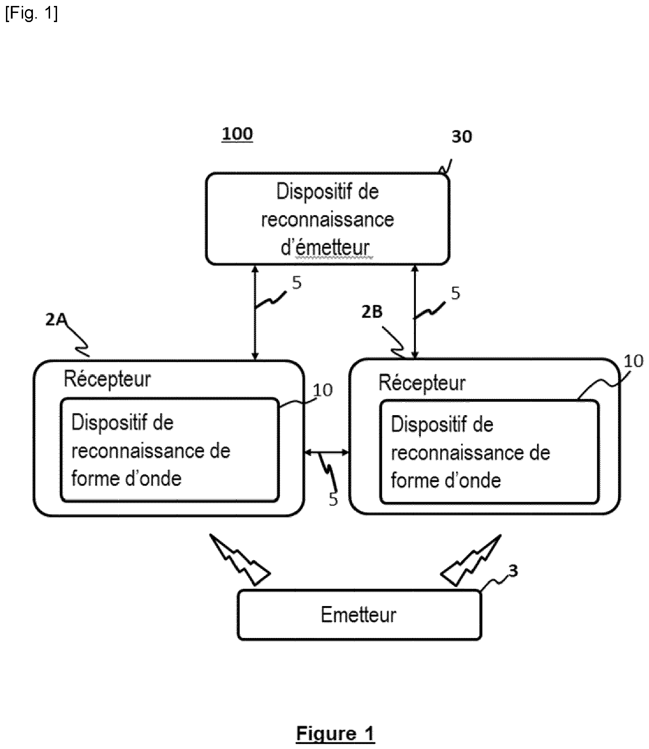

La figure 1 représente un exemple de système 100 dans lequel peut être implémenté un procédé et un dispositif de reconnaissance de formes d'onde, selon des modes de réalisation de l'invention.

Le système 100 peut être un système de détection de radar configuré pour détecter un émetteur 3 dans une zone (par exemple une zone de surveillance). Dans certaines applications de l'invention, le système de détection 100 peut être par exemple un système configuré pour localiser l'émetteur 3 et/ou identifier et/ou reconnaître l'émetteur 3. La suite de la description sera faite principalement à une application de l'invention à la reconnaissance d'émetteur, à titre d'exemple non limitatif.

Dans l'exemple de la figure 1, le système 100 comprend deux porteurs 20A et 20B comprenant chacun un récepteur 2A et 2B respectivement. Les porteurs 20A et 20B peuvent être par exemple des porteurs aériens espacés l'un de l'autre d'une certaine distance (par exemple de l'ordre du kilomètre) et éclairés simultanément par le lobe principal d'un émetteur 3 à localiser. L'émetteur 3 peut par exemple être un radar. Les deux récepteurs 2A et 2B peuvent être configurés pour localiser l'émetteur 3. Dans la suite de la description, un porteur sera généralement désigné par la référence 20 et un récepteur sera généralement désigné par la référence 2. Dans un exemple d'application de l'invention, un récepteur 2 peut être par exemple un capteur d'écoute passive.

L'émetteur 3 est configuré pour émettre un signal comprenant une série d'impulsions électromagnétiques (impulsions radar) définissant une forme d'onde impulsionnelle pseudo-aléatoire du signal.

Selon des modes de réalisation de l'invention, un récepteur 2 est apte à recevoir le signal émis par l'émetteur et à mettre en oeuvre un procédé de reconnaissance de la forme d'onde pour reconnaître la forme d'onde impulsionnelle pseudo-aléatoire du signal à partir des données relatives aux impulsions reçues.

La figure 1 représente un mode de réalisation du système 100 dans lequel chaque récepteur 2A et 2B comprend un dispositif de reconnaissance de forme d'onde 10.

Plus généralement, le dispositif de reconnaissance de forme d'onde 10 peut être prévu dans un seul ou plusieurs récepteurs 2.

Dans un exemple d'application de l'invention, un dispositif de reconnaissance de forme d'onde 10 du système 100 peut échanger des données avec un dispositif de reconnaissance d'émetteur 30 configuré pour réaliser la reconnaissance de l'émetteur 3 via une liaison de données 5 associée à un débit. Le dispositif de reconnaissance peut être prévu sur une plateforme centralisée ou dans l'un des récepteurs. Dans l'exemple de la figure 1, chaque récepteur 2A et 2B est équipé d'un dispositif de reconnaissance de forme d'onde 10 pouvant échanger des données avec un dispositif de reconnaissance d'émetteur 30 central, configuré pour reconnaître l'émetteur 3. Dans d'autres exemple d'application, le dispositif de reconnaissance d'émetteur 30 peut être remplacé par un dispositif d'identification de l'émetteur 3 ou par un dispositif de localisation de l'émetteur 3.

Le dispositif de reconnaissance de forme d'onde 10 selon les modes de réalisation de l'invention exploite avantageusement deux caractéristiques communes aux radars à formes d'onde pseudo-aléatoires. Ces deux caractéristiques sont liées à un au moins un paramètre caractérisant les impulsions (encore appelés « paramètre d'impulsion ») tels que par exemple et sans limitations un paramètre relatif aux temps d'arrivées des impulsions.

Selon les modes de réalisation de l'invention, le dispositif de reconnaissance de forme d'onde 10 est configuré pour reconnaître une forme d'onde à partir :

- d'une première caractéristique représentant un ensemble de paramètres d'impulsions, comprenant au moins un paramètre d'impulsion, chaque paramètre d'impulsion de l'ensemble de paramètres d'impulsion pouvant prendre des valeurs dans un ensemble fini de valeurs possibles ; et
- d'une deuxième caractéristique correspondant à une caractéristique des formes d'onde pseudo-aléatoires selon laquelle l'enchaînement des valeurs de l'ensemble de paramètres d'impulsion considéré constitue un processus Markovien (P. Bremaud. Markov chains, Gibbs fields, Monte-Carlo simulations, and queues. Springer. 1998).

Dans un mode de réalisation, l'ensemble de paramètres d'impulsions considéré peut être limité à un paramètre d'impulsion unique ou peut être un tuple de paramètres d'impulsion comprenant une pluralité de paramètres d'impulsion.

Dans les modes de réalisation où l'ensemble des paramètres d'impulsion est limité à un paramètre d'impulsion unique, le paramètre d'impulsion peut être par exemple la différence de temps d'arrivées des impulsions (DTOA). Dans un tel exemple de réalisation, le dispositif de reconnaissance de forme d'onde 10 est configuré pour reconnaître une forme d'onde à partir :

- d'une première caractéristique représentant la différence de temps d'arrivée entre deux impulsions consécutives (DTOA, *differential time of arrival*) ; et
- une deuxième caractéristique correspondant à une caractéristique des formes d'onde pseudo-aléatoires selon laquelle l'enchaînement des valeurs de DTOA constitue un processus Markovien.

Dans cet exemple, la première caractéristique qui représente la différence de temps d'arrivée entre deux impulsions consécutives peut prendre des valeurs parmi un ensemble fini de valeurs possibles. Les temps d'émissions des impulsions peuvent être choisis dans le système radar d'après un peigne de valeurs de DTOA. Après un temps de trajet qui peut être considéré comme constant à l'échelle d'un train d'impulsions, les temps d'arrivée peuvent être mesurés par le récepteur 2, avec un bruit gaussien dont l'écart-type est généralement assez faible devant l'écart entre les DTOA les plus proches.

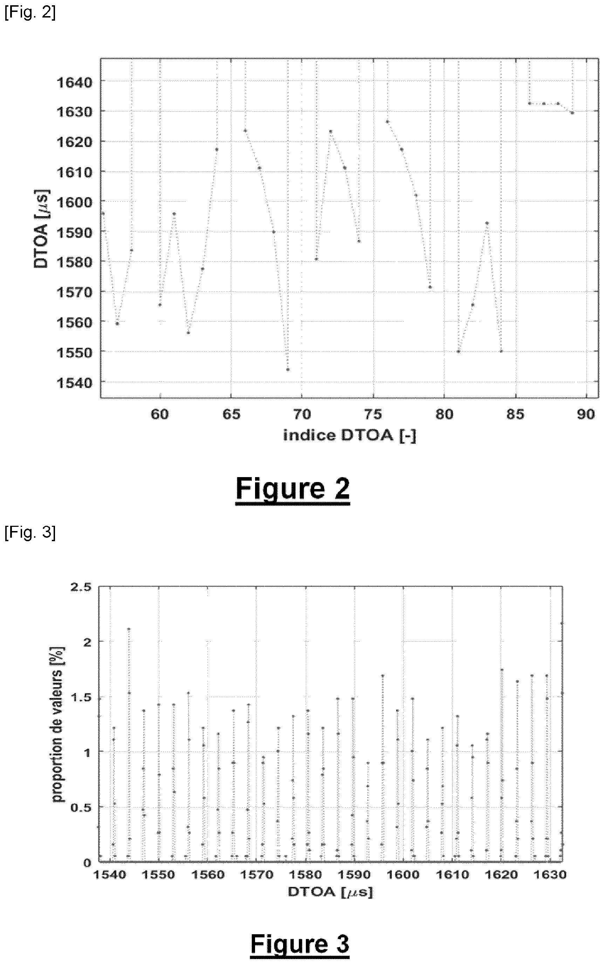

La figure 2 est un diagramme de valeurs de différences de temps d'arrivée (DTOAs) entre des impulsions consécutives d'un radar pseudo-aléatoire et la figure 3 est un histogramme de valeurs de DTOAs correspondant, selon un exemple de réalisation de l'invention dans lequel les impulsions sont émises par un radar naval intercepté en mer.

Comme illustré sur la figure 2, la suite des DTOAs ne présente pas de régularité apparente. Les sauts de valeurs qui sortent de l'échelle des ordonnées correspondent soit à des impulsions manquées, soit à des ruptures d'éclairement du radar au cours de son balayage angulaire. La figure 3 montre un histogramme des valeurs de DTOA, en proportion d'impulsions interceptées, qui sont ici au nombre de 2150. Il peut être noté que les valeurs se répartissent sur un peigne de $K$ = 32 valeurs moyennes ou « modes », notés ($\mu_1$, $\mu_2$ ..., $\mu_K$) selon un ordre croissant de valeurs comprenant dans l'ordre la valeur $\mu_1$ = 1538 $\mu$s, la valeur $\mu_2$ = 1541 $\mu$s, etc., jusqu'à la valeur $\mu_K$ = 1631 $\mu$s, avec un écart-type autour de chaque mode qui est faible devant l'écart entre les modes.

La deuxième caractéristique considérée pour la reconnaissance de forme d'onde pseudo-aléatoire porte sur le fait que l'enchaînement des valeurs de DTOA constitue un processus Markovien. Un enchaînement des valeurs de DTOA est considéré comme constituant un processus Markovien lorsque l'intervalle de temps $T_{n+1}$ entre le n-ème couple d'impulsions consécutives prend une valeur aléatoire dans le peigne de valeurs ($\mu_1$, $\mu_2$ ..., $\mu_K$) avec une probabilité qui ne dépend que de la valeur prise par l'intervalle de temps $T_n$ entre le couple d'impulsions précédent. Plus généralement, lorsque l'ensemble des paramètres d'impulsions est un tuple de paramètres d'impulsion, cette définition peut être généralisée en considérant des valeurs $\mu_1$ ... $\mu_K$ vectorielles dont chaque composante correspond à un paramètre (i.e. un tuple est un état).

En pratique, il peut s'agir d'un modèle Markovien « caché » ou *Hidden Markov Model,* HMM (L.R. Rabiner. A tutorial on hidden Markov models and selected applications in speech récognition. Proc. of the IEEE 77(2):257-286. (Feb. 1989)), car les modes de DTOA ne sont pas observés directement mais avec une valeur légèrement bruitée autour de chaque mode en raison de l'incertitude de mesure. Pour faciliter la compréhension de l'invention, dans la suite de la description, la variance de mesure de DTOA sera négligée dans un premier temps, à titre de simplification.

Un processus Markovien est caractérisé entre autres par une matrice de transition $P$ entre états. Les états de la matrice de transition désignent les modes d'histogramme de DTOA. La matrice de transition peut être représentée par un tableau de taille $K \times K$ comprenant les probabilités conditionnelles $P(T_{n+1} = \mu_p | T_n = \mu_q)$, $p$, $q$ = 1... $K$, rangées en ligne. Par exemple, pour le peigne de $K$ = 32 valeurs de la figure 2, la matrice de transition peut être estimée en décomptant tous les enchaînements de deux modes donnés de DTOA, dans le cas où le processus est stationnaire, c'est-à-dire que les probabilités conditionnelles de transition $P(T_{n+1} = \mu_p | T_n = \mu_q)$ restent les mêmes au cours du temps (*i.e.* ne dépendent pas de l'indice n).

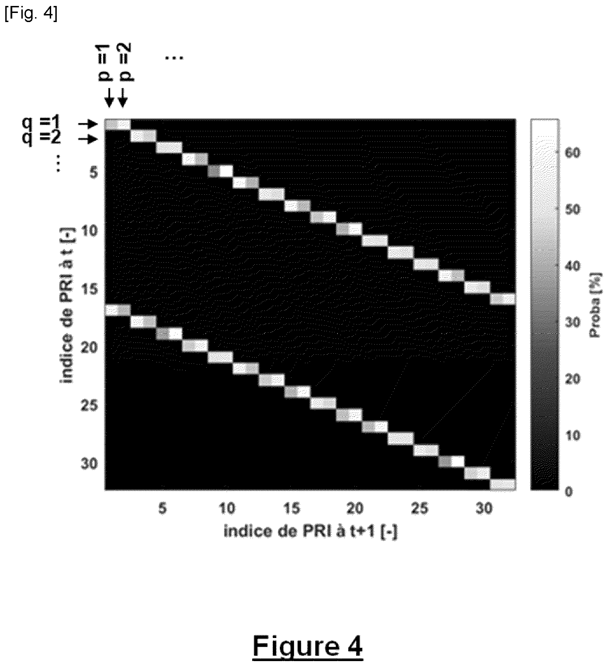

La figure 4 est un exemple de matrice de transition $P$ estimée associée aux DTOAs de la figure 2.

Comme illustré sur la figure 4, chaque ligne $q$ de la matrice ($q$ = 1... 32) comprend les probabilités de transition de l'état $T_n = \mu_q$ vers l'un des états suivants $T_{n+1} = \mu_p$, $p$ = 1... 32. La somme des coefficients de chaque ligne est par conséquent égale à 100%. Ainsi, dans la première ligne de la matrice ($q$ = 1), il peut être observé que les coefficients non nuls sont 45% et 55% dans les colonnes $p$ = 1 et $p$ = 2, ce qui signifie que, si à un instant donné le DTOA est la première valeur du peigne, dans l'exemple considéré $\mu_1$ = 1539 $\mu$s, alors le DTOA suivant est :

- soit encore une fois la première valeur $\mu_1$ du peigne avec une probabilité 45%,
- soit la deuxième valeur $\mu_2$ du peigne avec une probabilité 55%.

De même, il peut être observé que dans la deuxième ligne de la matrice (q=2) que, si à un instant donné le DTOA est la deuxième valeur du peigne (ici $\mu_2$ = 1541 $\mu$s), alors le DTOA suivant est :

- soit la troisième valeur $\mu_3$ du peigne avec probabilité 50%,
- soit la quatrième valeur $\mu_4$ du peigne avec probabilité 50%, etc.

Le procédé et le dispositif de reconnaissance de forme d'onde selon les modes de réalisation de l'invention sont avantageusement basés sur l'exploitation de la première caractéristique et de la deuxième caractéristique qui permettent d'améliorer les performances de reconnaissance des formes d'onde pseudo-aléatoires, et d'optimiser la quantité de données nécessaires à l'apprentissage d'un modèle $\mathcal{M}$ de la forme d'onde pseudo-aléatoire.

Il convient de noter que l'invention n'est pas limitée à des première et deuxième caractéristiques relatives à un paramètre d'impulsion de type DTOA et s'applique plus généralement à tout ensemble de paramètres d'impulsion caractérisant une forme d'onde (paramètre d'impulsion unique ou tuple de paramètres d'impulsion) tel que la fréquence porteuse émise, des couples temps-fréquences, ou tout autre paramètre ou tuple de paramètres pseudo-aléatoires caractérisant les impulsions interceptées. Néanmoins, pour faciliter la compréhension de l'invention, la description qui suit de certains modes de réalisation sera essentiellement faite en référence à l'utilisation d'une première caractéristique et d'une deuxième caractéristique relative à un paramètre d'impulsion unique lié aux temps d'arrivée des impulsions et notamment à un paramètre d'impulsion différentiel de type DTOA pour reconnaître les formes d'onde, à titre d'exemple non limitatif.

La mesure du paramètre d'impulsion ou du tuple de paramètres d'impulsion caractérisant la n-ème impulsion interceptée associé à la première et à la deuxième caractéristique sera noté $x_n$, avec $n = 1 ... N$ dans la suite de la description.

Les mesures ($x_n$) correspondent à au moins certaines de formes d'ondes à reconnaître.

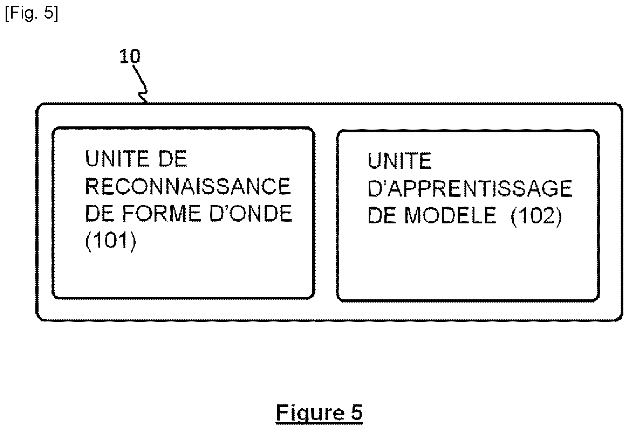

Comme représenté sur la figure 5, le dispositif de reconnaissance de forme d'onde 10 selon les modes de réalisation de l'invention comprend une unité de reconnaissance de forme d'onde 101 configurée pour reconnaître une forme d'onde pseudo-aléatoire, modélisée par un processus Markovien selon un modèle $\mathcal{M} = (\mu, P, \sigma)$, défini par :

- un vecteur $\mu \in \mathbb{R}^K$ dont les coefficients sont un peigne de K valeurs représentant les états du processus, avec $K \in \mathbb{N}$ ; les états de processus ($\mu_1, \mu_2 ..., \mu_K$) sont les coefficients du peigne $\mu$ et représentent les moments des paramètres d'impulsions considérés,
- une matrice $P$ de transition entre valeurs consécutives du peigne, la matrice de transition étant de taille $K \times K$ ; la matrice de transition $P$ entre états regroupe ainsi les probabilités de passage d'un état donné vers les autres états ; et
- un vecteur $\sigma \in \mathbb{R}^K$ comprenant un ensemble de coefficients, les coefficients représentant les écarts-types de mesure des états par le récepteur 2.

Le dispositif de reconnaissance de forme d'onde 10 comprend en outre une unité d'apprentissage 102 configurée pour mettre en oeuvre un apprentissage du modèle $\mathcal{M} = (\mu, P, \sigma)$, à partir de données de référence.

Etant donné un modèle $\mathcal{M} = (\mu, P, \sigma)$ l'unité de reconnaissance de forme d'onde 101 est configurée pour traiter les impulsions reçues successivement dans l'ordre de leur interception au cours du temps.

L'invention peut être mise en oeuvre par exemple pour effectuer une reconnaissance d'une forme d'onde radar pseudo-aléatoire intégré à un capteur d'écoute passive 2.

L'unité de reconnaissance de forme d'onde 101 est ainsi apte à recevoir en entrée une suite datée ordonnée dans le temps de mesures du ou des paramètres d'impulsion caractéristiques de la forme d'onde, et le modèle $\mathcal{M}$ de la forme d'onde.

L'unité de reconnaissance de forme d'onde 101 est configurée pour parcourir un arbre de décision A, dont les noeuds correspondent aux états par lesquels peuvent passer les différentes réalisations possibles de la forme d'onde, les noeuds étant liés entre eux à travers les niveaux de profondeur de l'arbre conformément à la matrice de transition $P$ du modèle $\mathcal{M}$.

Le parcours de l'arbre A consiste à explorer les noeuds, l'unité de reconnaissance de forme d'onde 101 étant configurée, à chaque passage par un noeud, pour :

- calculer une prédiction de valeur du ou des paramètres d'impulsion considéré(s) conditionnée notamment par l'état du noeud courant,
- vérifier si une précondition relative à la comparaison de la prédiction et des données d'entrée (mesures du ou des paramètres d'impulsion reçues en entrée), aux écarts-types de mesure près donnés par $\mathcal{M}$,
- incrémenter un compteur de manque si la précondition n'est pas vérifiée (non association entre la prédiction et les mesures données en entrée),
- mettre à jour un score en augmentant sa valeur si la précondition est vérifiée (cas d'association entre la prédiction et une des mesures données en entrée), la donnée atteinte par la prédiction pouvant être ensuite mise en mémoire et/ou le compteur de manques pouvant être ensuite réinitialisé (remis à zéro).

L'unité de reconnaissance de la forme d'onde peut alors déterminer si la forme d'onde est ou non reconnue dans les données d'entrée, à partir de la meilleure valeur du score parmi les valeurs obtenues dans les différentes branches de l'arbre parcourues.

L'unité de reconnaissance de forme d'onde 101 peut être configurée pour déterminer le score à partir des mesures $(x_n)$ et du modèle $\mathcal{M}$, en effectuant le parcours de l'arbre A de profondeur inférieure à N. Dans un mode de réalisation, le score calculé peut être la vraisemblance maximale des mesures $(x_n)$ conditionnellement au modèle $\mathcal{M}$.

Il convient de noter que, généralement, les mesures $(x_n)$ ne correspondent pas toutes à la forme d'onde à reconnaître. En particulier, un sous-ensemble des mesures $(x_n)$ peut être issu d'un autre modèle que $\mathcal{M} = (\mu, P, \sigma)$, quand d'autres formes d'onde sont mélangées à la forme d'onde d'intérêt (forme d'onde à reconnaître).

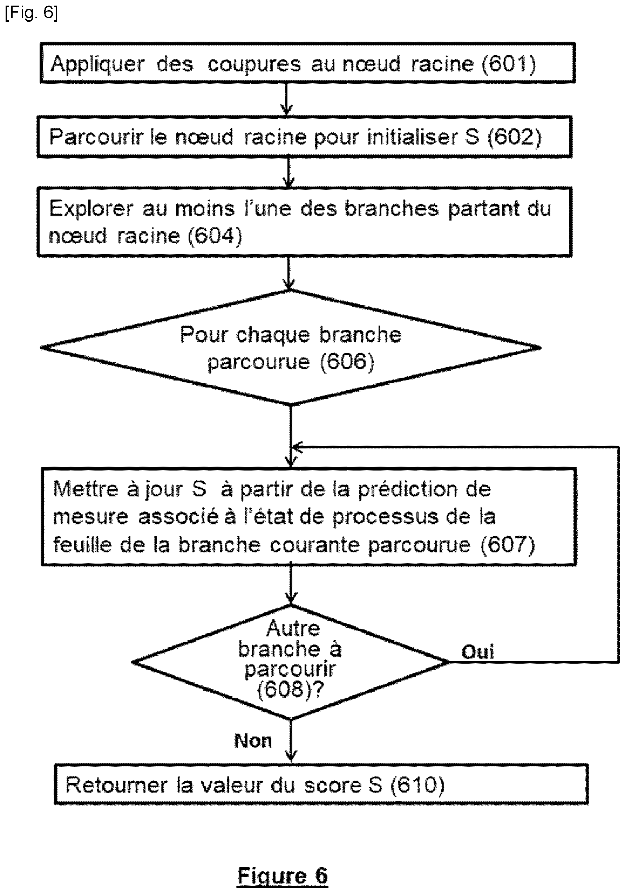

La figure 6 est un organigramme représentant le procédé de calcul du score S à partir du parcours de l'arbre A, selon des modes de réalisation. Le procédé de calcul de score S peut être mis en oeuvre par l'unité de reconnaissance de forme d'onde 101.

L'arbre parcouru A pour calculer le score comprend un ensemble de noeuds agencés selon l'arborescence de l'arbre entre un noeud racine et les noeuds feuilles.

Chaque noeud de l'arbre correspond à un des états de processus $(\mu_1, \mu_2 \ldots, \mu_K)$ correspondant aux coefficients du peigne $\mu$ et fournit une prédiction des mesures $(x_n)$. Si les mesures $(x_n)$ correspondent aux mesures d'un paramètre d'impulsion différentiel tel que le DTOA, le phasage des états du processus dans les données est inconnu de sorte que l'état initial est inconnu. Dans ce cas, dans une étape initiale 601 du calcul de score $S$, le noeud racine de l'arbre (noeud initial) peut subir $K$ coupures correspondant à autant d'hypothèses sur l'état initial, ou en variante utiliser une information supplémentaire pour réduire le nombre de coupures du noeud racine. Une opération de 'coupure', dans le domaine des arbres de décision, fait référence à une opération consistant à couper en autant de branches que de noeuds successeurs possibles.

À l'étape 602, le noeud racine de l'arbre A est parcouru. A l'étape 602, le noeud racine ('start') produit une prédiction $\hat{x}_1$ de temps d'arrivée (TOA, 'time of arrival' *signifiant « temps d'arrivée »*), égale au premier temps d'arrivée mesuré $x_1$. A cette étape du parcours de l'arbre, le score S est initialisé à 0 et la mesure du paramètre d'impulsion $x_1$ peut être mémorisée, par exemple dans une mémoire tampon T (*'buffer'*) du dispositif 10.

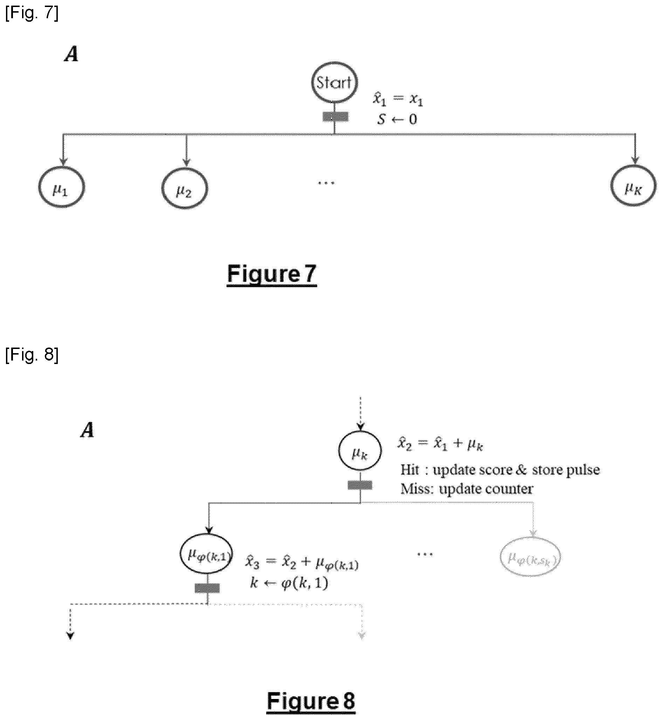

La figure 7 illustre l'étape 602 de calcul de score par parcours d'un arbre A, dans le cas où le paramètre d'impulsion différentiel est un paramètre de type DTOA (les états de processus considérés sont alors les valeurs de DTOA).

Comme illustré sur la figure 7, le noeud racine ('start') produit une prédiction $\hat{x}_1$ de temps d'arrivée (TOA, 'time of arrival' *signifiant « temps d'arrivée »*), égale au premier temps d'arrivée mesuré $x_1$. Dans cette étape du parcours de l'arbre, le score S est initialisé à 0 et la mesure du paramètre d'impulsion $x_1$ peut être mémorisée, par exemple dans la mémoire tampon (*buffer*).

En référence de nouveau à la figure 6, à l'étape 604, au moins l'une des branches partant du noeud racine ('start') qui mène vers l'état initial correspondant à l'un des DTOA du peigne de valeurs $\mu_1, \ldots, \mu_K$ est explorée.

Les branches de l'arbre à parcourir peuvent être explorées selon un ordre quelconque. En variante, les branches de l'arbre à parcourir peuvent être explorées selon un ordre choisi. Par exemple, les branches de l'arbre à parcourir peuvent être explorées avantageusement par ordre décroissant d'une valeur de probabilité encore appelée 'probabilité marginale' représentant la probabilité d'apparition d'une valeur de DTOA. Les différentes valeurs de DTOA n'apparaissant pas nécessairement toutes avec la même probabilité, l'utilisation d'un tel ordre de parcours des branches lié à la probabilité marginale permet de parcourir en priorité les branches qui ont les plus grandes chances d'aboutir à la reconnaissance de l'émetteur et d'interrompre le calcul du score dès que le score est suffisamment grand pour reconnaître la forme d'onde. Selon la théorie des chaînes de Markov, moyennant certaines conditions, la matrice de transition P possède une valeur propre égale à 1 avec multiplicité 1, et les probabilités marginales des états sont alors données par le vecteur propre associé.

Indépendamment des considérations sur l'ordre de parcours des branches de l'arbre, il est supposé que la branche sélectionnée à l'étape 606 est une branche dont le noeud suivant est associé à un état de processus $\mu_k$, avec $1 \le k \le K$, comme illustré par l'exemple de la figure 7. Le noeud correspondant à l'état $\mu_k$ fournit alors une prédiction de mesure $\hat{x}_2$ associée à la prochaine impulsion. Dans le cas où le paramètre d'impulsion considéré est le DTOA, $\hat{x}_2$ correspond au temps d'arrivée de la prochaine impulsion qui est égal à la somme de la prédiction $\hat{x}_1$ déterminée à l'étape précédente 602 et du DTOA. Le score S est alors mis à jour à l'étape 607 selon qu'un échantillon des mesures $(x_n)$ est proche de la prédiction $\hat{x}_2$ compte tenu de l'écart-type de mesure $\sigma_k$.

Le score S peut être mis à jour à l'étape 607, dans l'état $\mu_k$ si une précondition est satisfaite (ou vérifiée) indiquant qu'une impulsion est atteinte, en incrémentant la valeur courante du score S d'une valeur V choisie ou calculée.

Dans un mode de réalisation, le score S peut être mis à jour à l'étape 607, dans l'état $\mu_k$, selon la formule (3) suivante :

$$\min_n \frac{|x_n - \hat{x}_2|}{\sigma_k} \leq t \Rightarrow \text{Hit} \;:\; S \leftarrow S + \frac{1}{\sigma_k \sqrt{2\pi}} \exp\left(-\min_n \frac{|x_n - \hat{x}_2|^2}{2\sigma_k^2}\right) \qquad (3)$$

Dans la formule (3), la précondition C est égale à $\min_n \dfrac{|x_n - \hat{x}_2|}{\sigma_k} \leq t$ et la valeur V est égale à $\dfrac{1}{\sigma_k \sqrt{2\pi}} \exp\left(-\min_n \dfrac{|x_n - \hat{x}_2|^2}{2\sigma_k^2}\right)$.

Dans la formule (3), $\sigma_k$ désigne l'écart-type de mesure et $t$ désigne un seuil ajustable permettant de limiter les termes contribuant au calcul du score aux valeurs significatives. Par exemple et sans limitations, le seuil $t$ peut être égal à 3 ($t$ = 3). La précondition $C = \min_n \dfrac{|x_n - \hat{x}_2|}{\sigma_k} \leq t$ est réalisée si l'une des mesures est assez proche de la prédiction $\hat{x}_2$ et peut être associée à cette prédiction. Le terme 'Hit' (signifiant 'atteint') dans la formule (3) signifie que la prédiction $\hat{x}_2$ « atteint » une impulsion. Il est considéré qu'une prédiction atteint une impulsion si la précondition C est satisfaite (i.e. vérifiée).

Si la précondition C est satisfaite, comme indiqué par la formule (3), le score $S$ courant est augmenté significativement de la quantité V, qui peut être égale à $\dfrac{1}{\sigma_k \sqrt{2\pi}} \exp\left(-\min_n \dfrac{|x_n - \hat{x}_2|^2}{2\sigma_k^2}\right)$ dans le cas de la formule (3). Par ailleurs, l'impulsion argument du minimum dans la précondition C (c'est-à-dire $\dfrac{|x_n - \hat{x}_2|}{\sigma_k}$) peut être mémorisée dans la mémoire tampon T.

Il convient de noter que l'invention n'est pas limitée à l'équation de mise à jour de score S indiquée dans la formule (3) à titre d'exemple non limitatif ($S \leftarrow S + \dfrac{1}{\sigma_k \sqrt{2\pi}} \exp\left(-\min_n \dfrac{|x_n - \hat{x}_2|^2}{2\sigma_k^2}\right)$). En variante, d'autres formules de calcul du score $S$ peuvent être utilisées, et en particulier des formules de calcul de score adaptées pour réduire le coût calculatoire dû à l'exponentielle ('exp') dans la formule (3). Par exemple et sans limitations, l'équation de mise à jour du score $S$ de la formule (3) peut être remplacée par un simple incrément $S \leftarrow S + 1$ (dans ce cas V est une valeur fixée à 1).

La figure 8 illustre la première itération des étapes 604 à 607 de la figure 6 dans le cas d'un paramètre d'impulsion différentiel de type DTOA.

Si la précondition C de la formule (3) n'est pas satisfaite, il est détecté un manque d'impulsion ('*Miss*'), et un compteur de manques est alors incrémenté, comme illustré sur la figure 8.

En référence de nouveau à la figure 6, le parcours de l'arbre se poursuit après l'étape 607, de manière itérative, en élaguant les branches si le compteur de manques (« miss ») atteint une valeur maximale de manques prédéfinie, c'est-à-dire qu'un nombre de manques consécutifs correspondant à la valeur maximale de manques est atteint. A la (i - 1)-ème itération de l'étape 607, avec i >_ 3, le score S est mis à jour, dans l'un des noeuds $\mu_k$, $1 \leq k \leq K$, correspondant au noeud suivant de la branche courante, avec la prédiction $\hat{x}_i$ de la mesure du paramètre d'impulsion (TOA par exemple).

La prédiction $\hat{x}_i$ peut être déterminée à partir de l'estimation précédente du paramètre d'impulsion $\hat{x}_{i-1}$ et d'un des états $\mu_k$ successeur du noeud courant ($\hat{x}_i = \hat{x}_{i-1} + \mu_k$). Si le paramètre d'impulsion n'est pas un paramètre différentiel alors la prédiction est plus simplement définie par $\hat{x}_i = \mu_k$ avec k désignant l'indice de l'état dans la branche, après coupure du noeud courant. Si l'état est vectoriel, chaque composante est prédite selon sa nature différentielle ou non.

Dans les modes de réalisation où les états de processus correspondent à un paramètre d'impulsion de type DTOA (différences de temps d'arrivée entre impulsions consécutives), les prédictions associées aux noeuds de l'arbre sont les temps d'arrivées des impulsions, la première prédiction $\hat{x}_1$ du parcours coïncide avec la première mesure de temps d'arrivée du jeu de donnée d'entrée, tandis que les prédictions suivantes $\hat{x}_i$ intègrent les différences de temps d'arrivée successives.

Dans un tel mode de réalisation, la prédiction $\hat{x}_i$ peut correspondre à la somme de l'estimation précédente du paramètre d'impulsion $\hat{x}_{i-1}$ et d'un des états $\mu_k$ successeur du noeud courant ($\hat{x}_i = \hat{x}_{i-1} + \mu_k$).

Dans des modes de réalisation, le score S peut être mis à jour à l'étape 607 selon la formule (3) :

$$\min_n \frac{|x_n - \hat{x}_i|}{\sigma_k} \leq t \Rightarrow \text{Hit} \ : \quad S \leftarrow S + \frac{1}{\sigma_k \sqrt{2\pi}} \exp\left(-\min_n \frac{|x_n - \hat{x}_i|^2}{2\sigma_k^2}\right) \quad (3)$$

Comme illustré sur la figure 8, le parcours se poursuit en profondeur d'abord. Les états (états relatifs au DTOA par exemple) qui succèdent au nœud $\mu_k$ dans l'arbre *A* sont indexés par $<p(fc, 1), ..., \varphi(k, s_k)$ où $s_k$ désigne le nombre de successeurs (nœuds successeurs) du nœud $\mu_k$. Par exemple, avec les données des figures 2, 3 et 4, le phasage de l'émetteur 3 dans les données est tel que l'état initial, fixé à la première itération des étapes 604 à 607 (i=2) est $\mu_k = \mu_{13}$. La matrice de transition, illustrée par la figure 4, indique que deux DTOAs peuvent succéder au niveau du nœud $\mu_{13}$ dans la deuxième itération des étapes 604 à 607, correspondant à $\mu_{25}$ ou $\mu_{26}$. Ainsi, le nombre de successeurs du nœud $\mu_{13}$ est $s_{13} = 2$ dans le nœud $\mu_{13}$ puisqu'il y a deux valeurs possibles subséquentes à $\mu_{13}$, qui sont indexées par $\varphi(13,1) = 25$ et $\varphi(13,2) = 26$.

Dans un mode de réalisation, l'ordre de parcours des branches peut être un ordre de probabilité conditionnelle décroissante. En effet, à un niveau de profondeur donné dans l'arbre correspondant à un nœud $\mu_k$, conditionnellement à $\mu_k$, les DTOA suivants n'ont pas nécessairement la même probabilité de sorte qu'il est avantageux de parcourir en priorité les branches qui ont les plus grandes chances d'aboutir à la reconnaissance de l'émetteur 3 afin d'interrompre le calcul du score dès qu'il est suffisamment grand pour conclure. Il est à noter que dans les modèles Markoviens la probabilité conditionnelle est représentée par la matrice de transition P alors que la probabilité marginale est la mesure stationnaire.

Quel que soit l'ordre choisi de parcours des branches de l'arbre A, en supposant que la branche sélectionnée à l'étape 606 soit celle qui mène à l'état $\mu_{\varphi(k,l)}$, avec $1 \leq l \leq s_k$, l'étape 607 est réitérée à l'itération suivante en remplaçant l'indice $k$ par $\varphi(k, l)$ (pour déterminer similairement les prédictions de TOA, la mise à jour du score ou du compteur de manque, et le cas échéant mémoriser l'impulsion atteinte par la prédiction).

Ainsi, à une itération *i* ultérieure, le score *S* peut être mis à jour, dans le nœud $\mu_{\varphi(k,l)}$, correspondant au nœud suivant de la branche courante, avec la prédiction $\hat{x}_i$ de la mesure du paramètre d'impulsion (TOA par exemple) selon la formule (3) ci-dessus :

$$\min_n \frac{|x_n - \hat{x}_i|}{\sigma_{\varphi(k,l)}} \leq t \Rightarrow \text{Hit} \ : \quad S \leftarrow S + \frac{1}{\sigma_{\varphi(k,l)} \sqrt{2\pi}} \exp\left(-\min_n \frac{|x_n - \hat{x}_i|^2}{2\sigma_{\varphi(k,l)}^2}\right)$$

Il est à noter que la plupart du temps, l'exploration des branches peut ne pas aboutir, c'est-à-dire qu'apparaissent rapidement de nombreux manques consécutifs (par exemple si l'hypothèse de phasage initial et les différentes hypothèses de transitions de valeurs de DTOA ne sont pas les bonnes, ou alors si les données ne contiennent aucune réalisation du modèle $\mathcal{M} = (\mu, P, \sigma)$ de la forme d'onde pseudo-aléatoire). Dans un tel cas, l'exploration de l'arbre (i.e. l'« élagage » des branches) peut être arrêtée et le procédé peut remonter dans le parcours (à un niveau de l'arbre supérieur au niveau courant de l'arbre) pour explorer les branches laissées de côté dans les étapes précédentes (selon un procédé de retour-arrière ou *backtrack*).

Quand une condition d'arrêt est satisfaite à l'étape 608, le procédé se termine, à l'étape 610, en retournant la valeur du score S la plus grande (c'est-à-dire la dernière valeur du score mise à jour). À l'étape 610, d'autres informations peuvent être retournées telles que le parcours effectué dans l'arbre A et optionnellement le sous-ensemble des impulsions qui ont été *atteintes* par les différentes prédictions dans les différents niveaux de profondeur du meilleur parcours. Dans un mode de réalisation, la condition d'arrêt peut être satisfaite (ou vérifiée) à l'étape 608, lorsque toutes les branches ont été explorées et élaguées.

Alternativement, pour limiter le nombre de calculs, la condition d'arrêt de l'étape 608 peut être vérifiée si le score S est supérieur à un seuil de valeur de seuil $S_{seuil}$ car dans ce cas la forme d'onde est reconnue de sorte qu'il est inutile de parcourir les branches restantes (le score atteint une valeur paramétrable suffisamment élevée, les nœuds les plus probables étant explorés en priorité à chaque coupure). Cependant, les impulsions de la forme d'onde peuvent ne pas être entièrement extraites.

La condition d'arrêt de l'étape 608 peut être alternativement vérifiée si un nombre paramétrable de manques consécutifs est atteint par le compteur de manques, les dernières opérations étant alors compensées afin de reprendre le parcours à partir d'un niveau plus haut de l'arbre vers une autre branche.

Si le score retourné à l'étape 610 est trop faible, la forme d'onde ne peut pas être reconnue. Dans ce cas, le procédé de la figure 6 peut être réitéré en initialisant la première prédiction de la mesure du paramètre d'impulsion (TOA par exemple) sur le deuxième échantillon, soit $\hat{x}_1 = x_2$, puis, si une nouvelle itération du procédé est de nouveau nécessaire (score S encore insuffisant), en initialisant ensuite $\hat{x}_1$ sur le troisième échantillon, soit $\hat{x}_1 = x_3$, et ainsi de suite, afin de tenir compte du fait que l'émetteur n'est pas nécessairement présent au début de la fenêtre d'analyse contenant les données ($x_n$). La profondeur maximale de l'arbre étant décrémentée à $N - j$ quand $\hat{x}_1 = x_j$, le procédé est avantageusement de plus en plus rapide à exécuter.

Si la forme d'onde a été reconnue dans une fenêtre temporelle immédiatement précédente, il n'est généralement pas nécessaire de réitérer le procédé avec différentes initialisations de la première prédiction de la mesure du paramètre d'impulsion (TOA par exemple). Alternativement, au lieu d'être appliqué dans des fenêtres adjacentes, le procédé peut aussi être appliqué dans une fenêtre temporelle glissante, ce qui évite de réitérer le procédé dans une même fenêtre en réinitialisant la première prédiction de la mesure du paramètre d'impulsion (e.g. TOA).

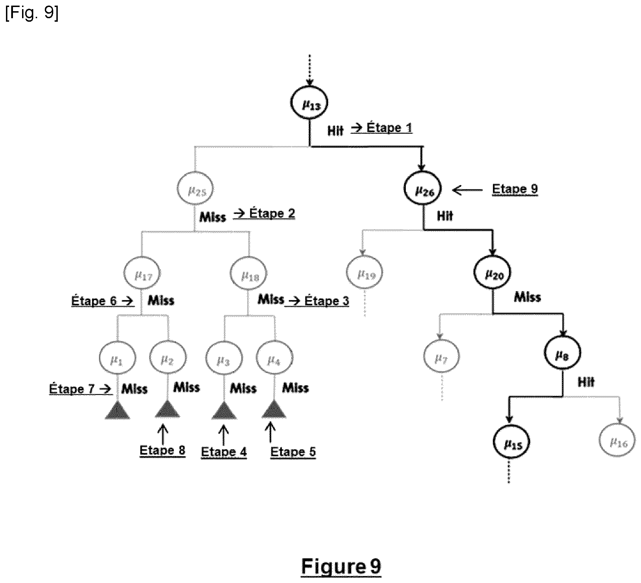

La figure 9 illustre le meilleur parcours d'arbre quand le procédé de la figure 6 est appliqué aux données des figures 2 et 3, dans une fenêtre d'analyse de 100 ms (dans cet exemple le paramètre d'impulsion utilisé est le DTOA), avec un élagage des branches lorsque trois manques ('miss') successifs sont détectés (par exemple, décomptés par le compteur de manques).

Dans l'exemple de la figure 9, le phasage de l'émetteur 3 dans les données est tel que l'état initial $\mu_{13}$ génère un premier 'hit', c'est-à-dire que la prédiction dans cet état (noeud $\mu_{13}$) atteint une impulsion (étape 1). L'exploration passe d'abord par le noeud $\mu_{25}$ où un premier manque ('miss') est détecté (étape 2), puis par les noeuds $\mu_{18}$ et $\mu_3$ où deux autres manques sont détectés (étapes 3 et 4). Trois manques 'miss' consécutifs étant détectés, le parcours de l'arbre est arrêté comme matérialisé par un triangle à la fin de la branche $\mu_{13}$ - $\mu_{25}$ - $\mu_{18}$ - $\mu_3$, et l'opération de *backtrack* remonte d'un niveau pour explorer la branche passant par $\mu_4$. Un autre manque étant détecté à ce noeud (étape 5), l'exploration s'arrête également à la fin de la branche $\mu_{13}$ - $\mu_{25}$ - $\mu_{18}$ - $\mu_4$. L'opération de *backtrack* (ou retour-arrière) remonte cette fois de deux niveaux et poursuit l'exploration par la branche $\mu_{13}$ - $\mu_{25}$ - $\mu_{17}$. Le compteur de manques à ce stade est ramené à 1, suite au manque détecté au niveau du noeud $\mu_{25}$. D'autres manques étant ensuite détectés aux niveaux des noeuds $\mu_{17}$ et $\mu_1$ (étape 6 et 7), l'exploration s'arrête à la fin de la branche $\mu_{13}$ - $\mu_{25}$ - $\mu_{17}$ - $\mu_1$ et de même à la fin de la branche $\mu_{13}$ - $\mu_{25}$ - $\mu_{17}$ - $\mu_2$ (étape 8).

L'opération de *backtrack* remonte alors de 3 niveaux pour entamer l'exploration de la branche $\mu_{13}$ - $\mu_{26}$. Au niveau du noeud $\mu_{26}$, une impulsion est atteinte par la prédiction de la mesure du paramètre d'impulsion (TOA dans cet exemple), ce qui génère un 'hit' et déclenche la mise à jour du score (étape 9). Il est à noter que l'exploration de la branche passant par le noeud $\mu_{19}$ n'est pas représentée en détail sur la figure 9 bien que cette branche soit rapidement élaguée.

Au noeud $\mu_{20}$, aucune impulsion n'est atteinte par la prédiction de la mesure du paramètre d'impulsion (TOA dans cet exemple), ce qui met le compteur de manques à 1. La branche $\mu_{13}$ - $\mu_{26}$ - $\mu_{20}$ - $\mu_7$ est ensuite élaguée et en remontant au noeud $\mu_8$, un autre *hit* est généré. Le compteur de manques est remis à 0 et l'exploration continue ainsi jusqu'à ce que toutes les branches soient explorées ou que le score soit suffisamment grand pour interrompre le parcours. À chaque itération du procédé de la figure 6, le procédé retourne le score, le meilleurs parcours de l'arbre A (dans l'exemple de la figure 9, $\mu_{13}$ - $\mu_{26}$ - $\mu_{20}$ - $\mu_8$ - $\mu_{15}$ - $\cdots$), et optionnellement les impulsions atteintes par les prédictions de la mesure du paramètre d'impulsion (TOA dans l'exemple de la figure 9) aux noeuds $\mu_{13}$, $\mu_{26}$, $\mu_8$, .... Tel qu'utilisé ici, « le meilleur parcours de l'arbre » fait référence au chemin du noeud initial au noeud final (à l'arrêt de l'algorithme) qui correspond au meilleur score.

Dans le cas où le ou les paramètre(s) d'impulsion mesurés $x_n$ ne sont pas des paramètres différentiels, le procédé peut être simplifié car l'état initial est connu. En effet, le noeud racine est directement l'état initial de sorte qu'il n'est pas requis de le couper en autant de branches que d'états initiaux possibles. Il n'est pas non plus nécessaire d'intégrer la prédiction de mesure, c'est-à-dire qu'il n'est pas nécessaire de calculer la somme cumulée des états (si le paramètre n'est pas différentiel, la transition vers l'état suivant n'implique pas de sommer les états pour obtenir une prédiction de la valeur du paramètre).

L'homme du métier comprendra aisément que l'invention n'est pas limitée à la formule du calcul de score de l'équation 1. En particulier, le calcul du score défini dans l'équation 1 correspond à un calcul de vraisemblance qui peut être adapté ou simplifié. Le score peut être en variante un simple compteur de *hits* (atteinte de prédictions par des impulsions) pour alléger la charge de calcul que représente l'exponentielle. Dans une autre variante, le facteur $\frac{1}{\sigma_k \sqrt{2\pi}}$ peut être ignoré en considérant que les écarts-types $\sigma_k$ sont constants même si le modèle (souvent appris avec des données de référence) indique qu'ils sont légèrement différents.

Par ailleurs, le procédé de reconnaissance de forme d'onde n'est pas limité à un parcours de l'arbre en profondeur d'abord. Dans une variante à base d'intelligence artificielle, l'arbre A peut être alternativement parcouru en largeur d'abord, c'est-à-dire en explorant d'abord tous les noeuds d'une profondeur donnée dans l'arbre.

Dans le cas de paramètres d'impulsion différentiels comme le DTOA, de petites erreurs sur les valeurs des états $\mu$ dans le modèle peuvent s'accumuler à chaque prédiction et ainsi causer une interruption précoce du procédé. Pour éviter une telle accumulation de petites erreurs sur les valeurs des états $\mu$, dans un mode de réalisation, l'étape 607 du procédé de reconnaissance de forme d'onde peut comprendre, en réponse à la génération de 'hit' (atteinte d'une impulsion par la prédiction) une correction des prédictions $\hat{x}_i$ en les recentrant sur l'impulsion atteinte par la prédiction (i.e. l'argument du minimum dans la précondition de l'équation 1), selon les équation 4A ou 4B suivantes :

$$\hat{x}_i = \arg\min_{x_n} \left( \frac{|x_n - \hat{x}_{i-1} - \mu_k|}{\sigma_k} \right) \quad \text{(4A)},$$

Si les variances associées aux états sont ignorées, l'équation (4A) peut être remplacée par :

$$\arg\min_{x_n}(|x_n - \hat{x}_{i-1} - \mu_k|) \quad \text{(4B)}$$

Dans une autre variante, l'étape 607 du procédé de reconnaissance de forme d'onde peut comprendre, en réponse à la génération de *'hit'* (atteinte d'une impulsion par la prédiction), une ré-estimation conjointe des prédictions successives après un nombre donné de *hits,* selon l'équation suivante (5) :

$$(\hat{x}_l, \dots, \hat{x}_i) = \arg\min_{y_l \dots y_i} \sum_{t=l}^{i} \min_n \frac{|x_n - y_t|^2}{\sigma_t^2} \quad \text{(5)}$$

L'équation (5) est définie sous contrainte que :

$$y_{t+1} - y_t = \mu_t \text{ pour } t = l \dots i - 1 \quad \text{(6)}$$

Dans l'équation (6), les paramètres $\mu_t$ pour $t = l \dots i$ - 1, désignent les états du chemin courant associés à des « hits » et les paramètres $\sigma_t^2$ , pour $t = l \dots i$ - 1, désignent les variances associées. Dans des modes de réalisation, les variances peuvent être ignorées.

Le procédé de reconnaissance de forme d'onde 10 selon les modes de réalisation de l'invention permet ainsi de reconnaître une réalisation d'une forme d'onde pseudo aléatoire décrite par un modèle $\mathcal{M} = (\mu, P, \sigma)$ donné a priori. Dans le cas d'une implémentation de l'invention sous la forme du dispositif 10, la reconnaissance de forme d'onde à partir du modèle $\mathcal{M} = (\mu, P, \sigma)$ est mise en oeuvre par l'unité de reconnaissance de forme 101.

Dans des modes de réalisation, il est en outre proposé un procédé d'apprentissage du modèle $\mathcal{M} = (\mu, P, \sigma)$, à partir de données de référence (encore appelé 'procédé d'entraînement du modèle').

L'apprentissage du modèle $\mathcal{M}$ consiste à estimer au mieux les états $\mu$, c'est-à-dire l'ensemble de valeurs pouvant être prises par le(s) paramètres(s) d'impulsion mesurés par le récepteur 2, avec les écarts-types de mesure $\sigma$, ainsi que la matrice de transition P entre états, à partir de données de référence.

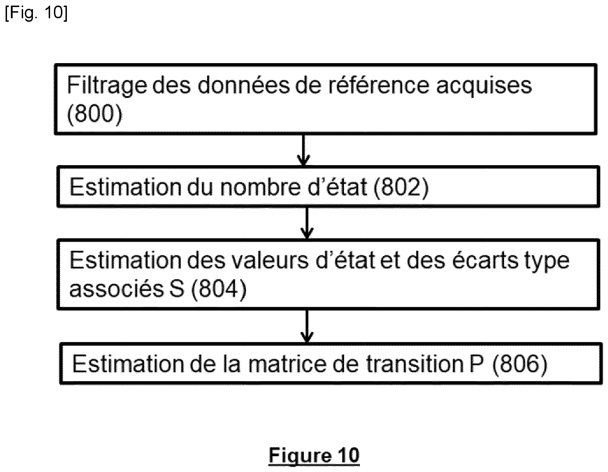

La figure 10 illustre le procédé d'apprentissage du modèle $\mathcal{M} = (\mu, P, \sigma)$, à partir de données de référence, selon des modes de réalisation de l'invention. Le procédé peut être mis en oeuvre par l'unité d'apprentissage 102 du dispositif de reconnaissance de forme d'onde 10. Les données de références sont de même nature que les impulsions reçues. Elles peuvent être interceptées préalablement et stockées dans une mémoire pour être utilisées dans la phase d'apprentissage du modèle.

À l'étape 800, les données de références sont filtrées. Cette étape de filtrage consiste à éliminer d'éventuels mélanges dans les données de référence (éventuelles impulsions parasites minoritaires). Les données de référence comprennent essentiellement des données de mesures de l'émetteur 3, dont le modèle est à apprendre. De telles données de mesure sont obtenues à l'aide de moyens d'acquisition (le moyen d'acquisition peut être par exemple le récepteur 2 lui-même, c'est-à-dire celui qui met en oeuvre le procédé de reconnaissance de forme d'onde selon les modes de réalisation de l'invention) ou d'autres moyens d'acquisitions adaptés comme par exemple d'autres récepteurs distincts utilisés dans des missions de renseignement antérieures et capables de fournir des données de même nature que le récepteur 2 qui met en oeuvre le procédé de reconnaissance de forme d'onde selon les modes de réalisation de l'invention.

Cependant, en fonction du moyen d'acquisition des données de référence, les données de références peuvent en outre comprendre une faible proportion de mesures provenant d'autres émetteurs. L'étape 800 peut être réalisée en utilisant toute technique adaptée de détection d'échantillons hors distribution statistique (ou 'outliers') permettant d'éliminer les mesures non significatives. Des exemples de technique adaptée de détection d'échantillons hors distribution statistique comprennent, sans limitations, les forêts d'isolement, un facteur local aberrant, la technique des plus proches voisins, la technique du DBscan, etc. Le filtrage de l'étape 800 n'est de préférence pas appliqué à chaque acquisition, car il faut une représentativité statistique de l'échantillon, mais avantageusement à la mise en oeuvre du procédé.

À l'étape 802, le nombre d'états $\mu$ est estimé à partir des données de référence filtrées à l'étape 800.

Connaissant la résolution du capteur, l'estimation des états $\mu$ se base sur un histogramme $H$ des mesures de l'émetteur (données de référence filtrées), avec un pas adapté à la résolution. Par exemple, dans le cas où le paramètre d'impulsion considéré est le DTOA, le support de l'histogramme $H$ peut être limité supérieurement au double de la valeur la plus faible de DTOA, afin de ne pas prendre en compte les DTOA dus à des impulsions manquées.

Tel qu'utilisée ici, l'expression « support d'histogramme » fait référence à un ensemble de valeurs où l'histogramme n'est pas nul. Par ailleurs, la « limite supérieure » de l'histogramme fait référence à sa valeur maximale (ainsi, l'expression « limité supérieurement » signifie « tronqué à droite » ou « dans les plus grandes valeurs »).

L'histogramme $H$ représente le nombre d'impulsions détectées en fonction d'un indice d'intervalle. L'abscisse de l'histogramme correspond ainsi à l'indice d'intervalle dont la largeur est égale à une résolution (en $\mu$s), tandis que l'ordonnée de l'histogramme correspond au nombre d'impulsions appartenant à l'intervalle indexé en abscisse.

Dans un mode de réalisation, le nombre d'états $\mu$ peut être estimé à partir de l'histogramme $H$, en décomptant les éléments des composantes connexes de l'histogramme sur son axe des abscisses.

Une composante connexe est un ensemble d'intervalles consécutifs (ou de pas ('step') d'histogrammes) contenant un décompte non nul d'impulsions. En considérant que K composantes connexes sont extraites, chacune des composantes connexes correspond à une valeur de composante du peigne $\mu$.

Le nombre d'états $\mu$ correspond alors au nombre de modes de l'histogramme H qui est estimé en déterminant le nombre de composantes connexes de cardinal suffisant (c'est à dire au moins égal à 2) dans l'histogramme.

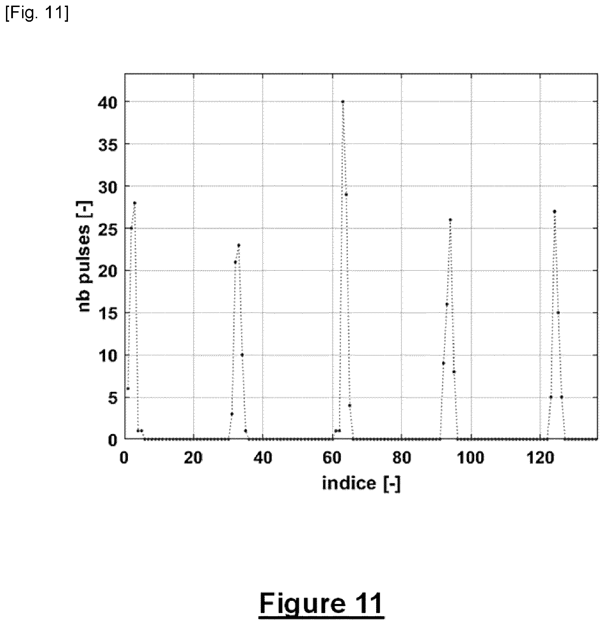

La figure 11 représente un agrandissement d'un histogramme $H$ autour des premiers modes du DTOA, dans l'exemple des données des figures 2 et 3 correspondant à un paramètre d'impulsion de type DTOA. Un « mode de DTOA » désigne un maximum local d'histogramme de DTOA.

Comme illustré sur la figure 11, les cinq premiers intervalles de l'histogramme H (d'indices 1 à 5) contiennent un nombre non nul d'impulsions, et forment la première composante connexe sur l'axe des abscisses dont le cardinal est 5. De même, les intervalles d'histogramme d'indices 31 à 35 forment une deuxième composante connexe de cardinal 5 aussi. Le nombre de composantes connexes de cardinal suffisant (c'est à dire au moins égal à 2) permet d'estimer le nombre de modes d'histogramme, c'est-à-dire le nombre d'états $\mu$.

À l'étape 804, la valeur des états $\mu$ est estimée.

Dans un mode de réalisation, la valeur des états $\mu$ peut être estimée en déterminant la valeur médiane des centres des intervalles formant chaque composante connexe, chaque valeur médiane fournissant la valeur d'un des $K$ états $\mu_k$ du peigne $\mu$. Ainsi, pour chaque composante connexe de cardinal $N$ associée à un ensemble de N indices d'intervalles consécutifs, il est déterminé la valeur du centre de chacun des intervalles associés à ces indices (en $\mu$s), en considérant la résolution de mesure (la largeur d'un indice d'intervalle est égale à une résolution de mesure) puis la valeur médiane ou la valeur moyenne des valeurs des centres de ces intervalles (somme des valeurs des N centres des intervalles de la composante connexe divisée par N).

Dans l'exemple de la figure 11, les cinq premiers intervalles d'indice 1 à 5, formant la première composante connexe, ont pour centres respectivement 1537.7 $\mu$s, 1537.8 $\mu$s, 1537.9 $\mu$s, 1538.0 $\mu$s et 1538.1 $\mu$s (la résolution de mesure dans l'exemple de la figure 11 est 100 ns), ce qui fournit une valeur médiane égale à 1537.9 $\mu$s et ainsi la première valeur $\mu_1$ du peigne $\mu$. Une estimation des $K$ - 1 autres états $\mu_k$ et une estimation des écarts-types $\sigma$ associés peut être obtenue de façon similaire (dans cet exemple $K$ = 32).

L'écart type associé à l'état $k$ peut être estimé en utilisant l'estimateur standard

$$\sigma_k^2 = \frac{1}{M}\sum_{m=1}^{M}\left(c_{m,k} - \mu_k\right)^2$$

avec $c_{m,k}$ désignant la m-ième valeur de centre d'intervalles de la k-ième composante connexe et $\mu_k$ la moyenne correspondante. En variante, l'écart-type peut être estimé avec tout autre estimateur adapté (par exemple avec un estimateur sans biais qui divise la somme par $M$ - 1 plutôt que $M$).

Dans des modes de réalisation, l'estimation des états $\mu$ peut encore être affinée, de différentes manières, en utilisant tout estimateur statistique adapté exploitant la connaissance du nombre d'états. Par exemple, l'algorithme E-M (décrit par exemple dans (A.P. Dempster, N.M. Laird, D.B. Rubin, Maximum Likelihood from Incomplete Data via the EM Algorithm, Journal of the Royal Statistical Society B 39(1), pp.1-38, 1977) peut être utilisé pour affiner l'estimation. L'algorithme E-M est un algorithme optimal au sens du maximum de vraisemblance pour l'estimation des modes d'histogrammes si le bruit de mesure est Gaussien et centré. Un tel algorithme fournit également une estimation optimale de l'écart type $\sigma$ associé à chaque état $\mu$. En appliquant l'algorithme E-M à l'étape 804, il est possible d'obtenir une estimation des états $\mu$ et les écarts-types de mesure associés $\sigma$ très précise. Dans un mode de réalisation, à l'étape 804, les valeurs $\mu$ et $\sigma$ peuvent être d'abord estimées à l'étape 804 plus haut, puis l'algorithme E-M peut être ensuite appliqué.

Il est à noter que l'utilisation d'un algorithme E-M n'est qu'optionnelle, la mise en oeuvre de l'étape 804 sans application de l'algorithme E-M étant généralement suffisante.

À l'étape 806, la matrice de transition $P$ peut être estimée de façon quasi-optimale au sens du maximum de vraisemblance, si les écarts-types $\sigma$ sont faibles devant les écarts de valeurs entre les états $\mu$. Les coefficients de la matrice $P$ peuvent être estimés en décomptant toutes les transitions dans les données de références (nombre de transitions entre toutes les paires d'états). Ainsi le coefficient $P_{i,j} = P(\mu_j|\mu_i)$ de la matrice $P$, égal à la probabilité d'avoir l'état $\mu_j$ à la suite de l'état $\mu_i$, peut être estimé en décomptant toutes les transitions de l'état $\mu_i$ vers l'état $\mu_j$ et en normalisant la valeur obtenue (nombre de transitions de l'état $\mu_i$ vers l'état $\mu_j$) par le nombre total de transitions (l'état $\mu_i$ est obtenu quand une mesure $x_n$ est plus proche de $\mu_i$ que de tous les autres états, et l'état $\mu_j$ est obtenu quand la mesure suivante $x_{n+1}$ est plus proche de $\mu_j$ que de tous les autres états. L'opération de normalisation désigne la division de la valeur obtenue (nombre de transitions de l'état $\mu_i$ vers l'état $\mu_j$) par le nombre total de transitions.

Dans des modes de réalisation, les estimations ainsi obtenues de $\mu$, P, et $\sigma$ peuvent être encore optimisées ou affinées en appliquant un algorithme d'optimisation initialisé avec ces valeurs estimées $\mu, P$, et $\sigma$, tel que l'algorithme de Baum-Welch par exemple (L.R. Welch, Hidden Markov Models and the Baum-Welch Algorithm, IEEE Information Theory Society Newsletter 53(4), pp. 10-13, December 2003). Un tel algorithme est apte à estimer conjointement ces paramètres de façon itérative et optimale au sens du maximum de vraisemblance moyennant une initialisation convenable. Ainsi, une fois obtenues les valeurs $\mu$, P, et $\sigma$ avec le procédé de la figure 10, il est optionnellement possible de les optimiser encore en appliquant l'algorithme de Baum-Welch à ces valeurs considérées alors comme des valeurs d'initialisation.

Les modes de réalisation de l'invention permettent avantageusement de reconnaître un échantillon statistique d'impulsions issues d'un modèle $\mathcal{M}$ = ($\mu$, P, $\sigma$) associé à une forme d'onde pseudo aléatoire. Ils fournissent une solution de reconnaissance de forme d'onde particulièrement robuste aux mélanges, c'est-à-dire que les performances sont peu altérées si l'échantillon d'impulsions issues du modèle $\mathcal{M}$ est mélangé à un autre échantillon issu d'un autre modèle M', voire issu du même modèle. Une telle solution est en outre robuste aux impulsions manquées, c'est-à-dire que les performances sont peu altérées lorsque les impulsions ne sont pas toutes interceptées. Par ailleurs, le procédé et le dispositif de reconnaissance de forme d'onde selon les modes de réalisation de l'invention ont des performances significatives, même avec un faible nombre d'impulsions interceptées.

Avantageusement, le procédé et le dispositif de reconnaissance de forme d'onde selon les modes de réalisation de l'invention peut « apprendre » le modèle $\mathcal{M}$ = ($\mu$, P, $\sigma$) caractérisant le peigne de valeurs $\mu$, la matrice de transition P entre valeurs, et les écarts-types $\sigma$ de mesure des états, à partir d'un ensemble d'interceptions même très partielles de la forme d'onde. Bien que non limité à de telles applications, un tel apprentissage est particulièrement avantageux si le dispositif est utilisé sans avoir de grandes capacités en amont pour fournir des modèles de radar *a priori*. Il est également particulièrement avantageux dans les applications où les radars de l'environnement sont définis par logiciel de sorte que les opérateurs radar peuvent modifier relativement fréquemment les caractéristiques de la forme d'onde et donc le modèle associé, rendant alors inopérantes les bibliothèques d'identification de radars. Dans ce cas, la fonctionnalité d'apprentissage permet de reconnaître des émissions sur la base d'un historique récent d'interceptions sur la zone d'opérations, sans bibliothèques ou modèles a *priori* et de façon éventuellement anonyme (c'est-à-dire sans nécessairement associer un nom à un émetteur). Un tel apprentissage peut également être avantageux dans une application de l'invention à un système de renseignement, l'apprentissage permettant alors d'établir automatiquement un modèle d'émetteur radar pseudo-aléatoire plus précis et plus discriminant que les descriptions actuelles qui se limitent aux intervalles de valeurs minimale et maximale [$\mu_1$, $\mu_K$] ou bien au peigne de valeur ($\mu_1$, $\mu_2$ ... , $\mu_K$).

Dans la suite de la description, pour illustrer les performances de reconnaissance de la forme d'onde selon les modes de réalisation de l'invention, les exemples de données de référence des figures 2 et 3 correspondant à un paramètre d'impulsion de type DTOA seront considérées, en combinaison avec un processus de Poisson (décrit par exemple dans P. Bremaud. Markov chains, Gibbs fields, Monte-Carlo simulations, and queues. Springer. 1998) modélisant des impulsions parasites provenant d'autres émetteurs venant se mélanger aux impulsions de la forme d'onde d'intérêt. Le processus de Poisson est paramétré par la densité d'impulsions parasites (en s$^{-1}$), notée $\lambda$, qui varie. Les écarts-types de mesure des DTOA peuvent être considérés en outre comme tous identiques, et les facteurs

$$\frac{1}{\sigma_k\sqrt{2\pi}}, k = 1 \ldots 32$$

peuvent être supprimés dans le calcul du score (défini par l'équation 1). L'homme du métier comprendra aisément que l'invention n'est pas limitée à ces exemples, qui ne sont donnés qu'à titre d'illustration non limitative.

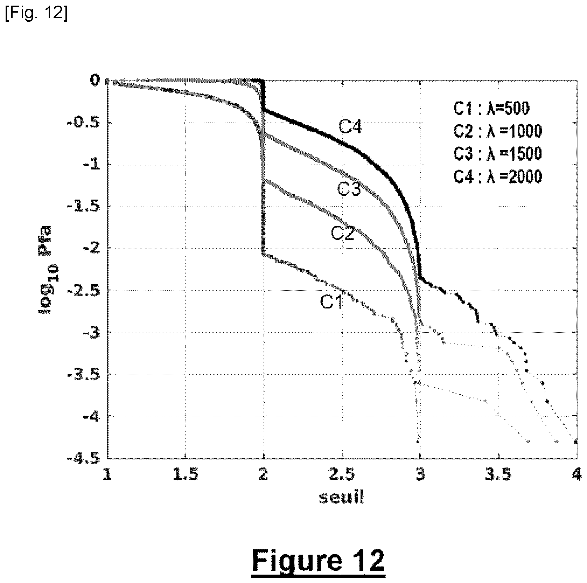

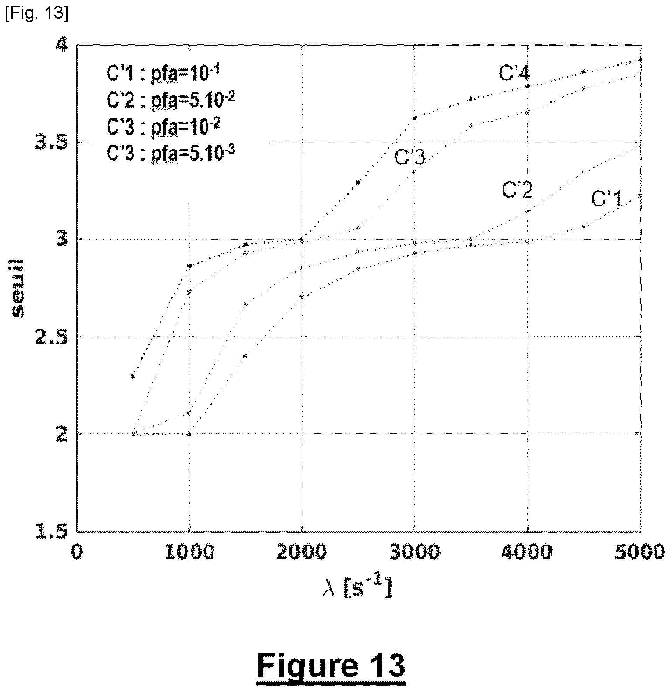

Les figures 12 et 13 représentent les valeurs de score retournées par le procédé de reconnaissance de forme d'onde (étape 610 de la figure 6), appliqué à M = $10^5$ réalisations de processus de Poisson pour différentes densités $\lambda$, dans une fenêtre temporelle de durée 100 ms. Lorsque les valeurs de score sont ordonnées par ordre croissant comme sur la figure 12, la m-ème valeur correspond à un seuil de score correspondant à une décision erronée de la reconnaissance de la forme d'onde avec une probabilité empirique d'erreur de $1 - \frac{m}{M}$ , m = 1... M. Par analogie avec la théorie de la détection, la probabilité d'erreur de reconnaissance est désignée par PFA (Probabilité de Fausse Alarme). La figure 12 représente différentes PFA ($\log_{10}$ PFA en ordonnée) en fonction du seuil de score (abscisse) pour différentes valeurs de $\lambda$ tandis que la figure 13 représente la valeur du seuil de score (en ordonnée) en fonction de $\lambda$ (en abscisses) pour différentes PFA.

La figure 13 représente ainsi la valeur du seuil à appliquer au score pour décider de la reconnaissance de la forme d'onde en fonction du paramètre $\lambda$ pour quelques valeurs de PFA. La plage de valeurs de $\lambda$ est relative à des situations relativement denses en impulsions. Il est observé qu'un seuil de score autour de 3 est globalement assez suffisant pour tenir la fausse alarme.

Il est supposé que le procédé de reconnaissance est appliqué à M = $10^3$ réalisations de la forme d'onde d'intérêt, mélangées à un processus de Poisson de densité fixée à $\lambda$ = 1000 s$^{-1}$, et avec un seuil de score de 2.73 (pour une PFA de $10^{-2}$ sur la figure 13), dans une fenêtre de 100 ms. Une réalisation de la forme d'onde est obtenue en fixant aléatoirement (i) le TOA de la première impulsion, (ii) le phasage (i.e. l'état initial de la forme d'onde), et (iii) les transitions entre états conformément aux probabilités dans la matrice de transition du modèle. Les réalisations de la forme d'onde durent 20 ms, de sorte que le nombre d'impulsions est généralement égal à 13 tandis que le nombre d'impulsions du processus de Poisson est situé autour de 100 (il s'agit de situations difficiles, avec d'importants mélanges d'impulsions parasites). En pratique, il est de plus fréquent qu'une partie des impulsions soit manquée. Le pourcentage d'impulsions manquées est appelé « taux de mitage ».

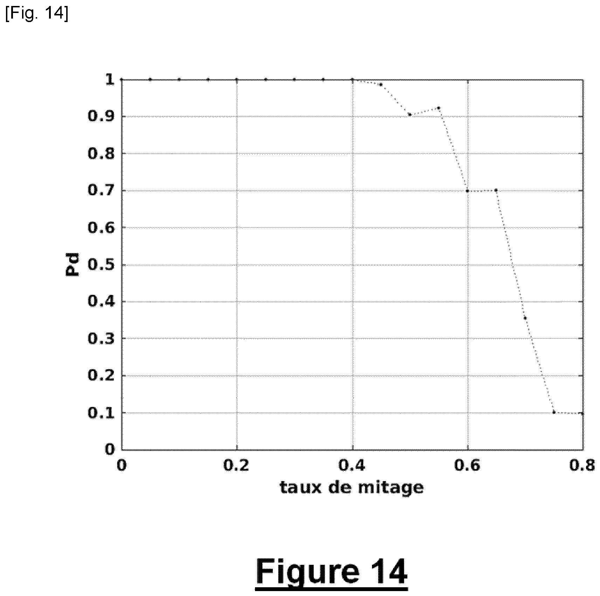

La figure 14 illustre la probabilité de reconnaissance de la forme d'onde d'intérêt mélangée à un processus de Poisson, en fonction du taux de mitage. La probabilité de reconnaissance de la forme d'onde est désignée par PD (Probabilité de Détection) par analogie à la théorie de la détection. Les impulsions manquées sont choisies aléatoirement dans l'ensemble des impulsions de la forme d'onde sans mitage d'une part, et dans l'ensemble des impulsions parasites issues du processus de Poisson sans mitage d'autre part.

La figure 14 montre que la probabilité de reconnaissance de la forme d'onde prend la valeur maximale 1 pour de faibles taux de mitage et reste très robuste jusqu'à ce que le taux de mitage atteigne 45%. Entre 45% et 65%, les performances de reconnaissance diminuent mais restent acceptables, avec une probabilité de reconnaissance supérieure à 0.7. Au-delà de 65%, la probabilité de reconnaissance chute rapidement. Ainsi, comme illustré par la figure 14, le procédé de reconnaissance est très robuste au mitage et aux mélanges.

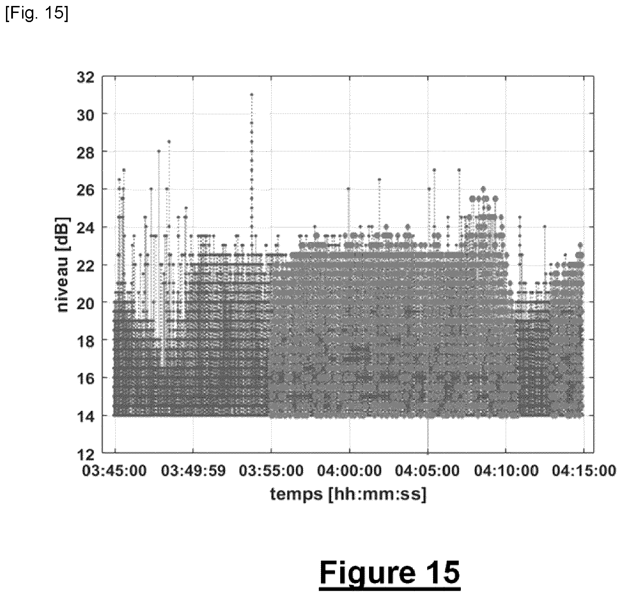

La figure 15 illustre les résultats du procédé de reconnaissance de forme d'onde appliqué à des données réelles. Plus précisément, la figure 15 représente les niveaux des impulsions interceptées en fonction du temps sur 30 min d'enregistrements réels, en dB (avec une modification des valeurs de niveaux non précisée). Comme montré sur la figure 15, il y a environ 51.000 impulsions, ce qui correspond à une densité moyenne $\lambda = \frac{51000}{30 \times 60} \approx 28\,s^{-1}$ bien plus faible que dans les simulations illustrées par les figures précédentes. Dans cet exemple, le procédé de reconnaissance de forme d'onde selon les modes de réalisation de l'invention a été appliqué dans des petites fenêtres temporelles adjacentes de durée environ 100ms, dans lesquelles la reconnaissance de la forme d'onde pseudo-aléatoire est testée. Le seuil de reconnaissance est fixé à 2.2.

Les losanges représentés sur la figure 15 indiquent les impulsions extraites lorsque la reconnaissance est positive. Il peut être observé que l'émetteur 3 est présent à partir de l'heure 03:55'. Vers 04:10', l'émetteur n'est plus reconnu dans les données pendant un peu plus de deux minutes, avant de réapparaître vers 04:13'.

Même sans disposer de la réalité de terrain qui indiquerait de quel émetteur provient chacune des 51.000 impulsions, il est possible d'établir par un examen des impulsions reconnues qu'elles forment des passages de lobes d'antenne radar périodiques, avec un éclairement toutes les 2.5 s.

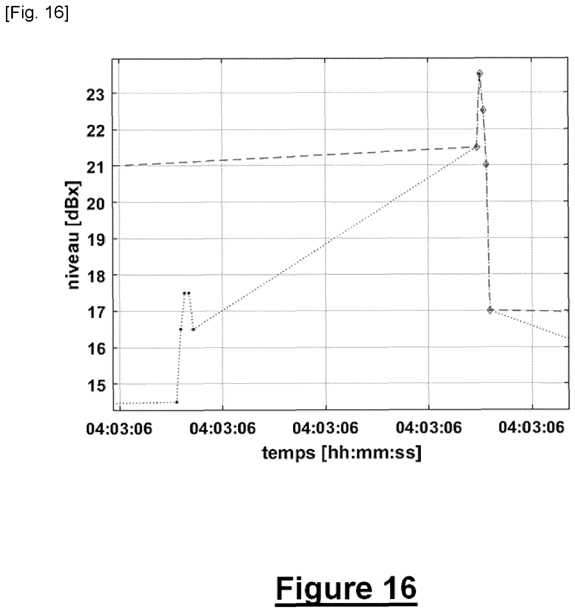

La figure 16 représente les niveaux des impulsions dans une fenêtre où la reconnaissance est positive. La figure 16 est un agrandissement (zoom) sur un lobe reconnu par le procédé de reconnaissance de forme d'onde selon des modes de réalisation de l'invention (à partir de données réelles).

La figure 16 montre un lobe formé par les impulsions reconnues, les impulsions étant seulement au nombre de 5, alors que le nombre de moments de DTOA est égal à 32 (i.e. nombre de valeurs des états). Les approches classiques de l'état de la technique reposant sur les valeurs minimale et maximale ou sur l'histogramme de DTOA, ne disposent pas assez d'informations pour pouvoir reconnaître la forme d'onde, dans ce cas où les impulsions sont seulement au nombre de 5.

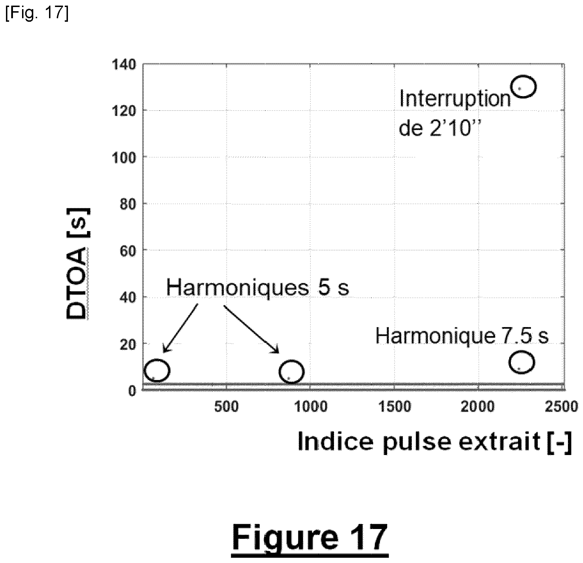

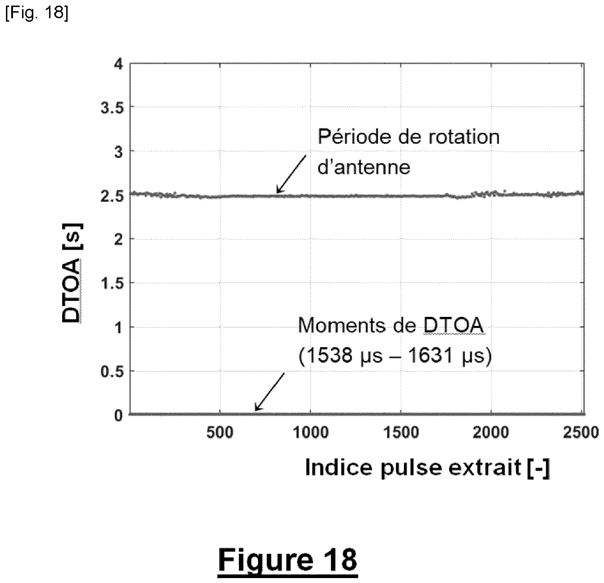

Les figures 17 et 18 montrent les DTOAs des impulsions extraites par le procédé de reconnaissance de la forme d'onde selon des modes de réalisation de l'invention.

La figure 17 illustre les DTOA des impulsions extraites au cours de la reconnaissance de forme d'onde (données réelles) tandis que la figure 18 est un agrandissement (zoom) en ordonnée de cette figure 17.

Dans les figures 17 et 18, les DTOA des impulsions extraites prennent des valeurs proches des états $\mu$ (i.e. les 32 moments de DTOA de la forme d'onde, qui sont les valeurs proches de 0 compte tenu de l'échelle en ordonnée), ainsi qu'autour de 2.5 s, qui est l'intervalle de temps entre deux passages de lobes (c'est-à-dire la période de rotation d'antenne d'un radar tournant).

Sur la figure 17, trois harmoniques de 2.5 s, à savoir deux harmoniques à 5 s et une à 7.5 s, peuvent être observés, représentant 4 lobes manqués en tout. Sur la figure 17, il peut également être observé une très grande valeur de 130s correspondant à l'intervalle approximatif [04:10' - 04:13'] de la figure 15 où l'émetteur n'est momentanément pas visible. Ce résultat permet de considérer qu'il n'y pas d'erreurs de reconnaissance sur ce jeu de données.

Le nombre de lobes reconnus étant 423 au total, il peut en être déduit que la probabilité de reconnaissance de la forme d'onde est autour de $\frac{423}{423+4} \approx 99\%$ et que la probabilité d'erreur est inférieure à $\frac{1}{30 \times 60 \times 10} \approx 6.10^{-5}$ puisqu'il y a 10 fenêtres de 100ms par seconde soit $30 \times 60 \times 10$ fenêtres dans 30 min.

Ainsi, bien qu'ils ne soient pas limités à de telles applications, les modes de réalisation de l'invention permettent de reconnaître des formes d'ondes pseudo-aléatoires en environnement difficile, avec des mélanges, des manques d'impulsions, et/ou un faible nombre d'impulsions des formes d'onde d'intérêt dans les données testées.

L'homme du métier comprendra que le système ou des sous-système selon les modes de réalisation de l'invention peuvent être mis en oeuvre de diverses manières par matériel (« hardware »), logiciel, ou une combinaison de matériel et de logiciels, notamment sous la forme de code de programme pouvant être distribué sous la forme d'un produit de programme, sous diverses formes. En particulier, le code de programme peut être distribué à l'aide de supports lisibles par ordinateur, qui peuvent inclure des supports de stockage lisibles par ordinateur et des supports de communication. Les procédés décrits dans la présente description peuvent être notamment implémentés sous la forme d'instructions de programme d'ordinateur exécutables par un ou plusieurs processeurs dans un dispositif informatique d'ordinateur. Ces instructions de programme d'ordinateur peuvent également être stockées dans un support lisible par ordinateur.

Par ailleurs, l'invention n'est pas limitée aux modes de réalisation décrits ci-avant à titre d'exemple non limitatif. Elle englobe toutes les variantes de réalisation qui pourront être envisagées par l'homme du métier.

**Revendications**

1. Procédé de reconnaissance de la forme d'onde d'un signal reçu par un récepteur en provenance d'un émetteur (3), ledit signal comprenant une série d'impulsions électromagnétiques définissant une forme d'onde pseudo-aléatoire du signal, **caractérisé en ce que** le procédé comprend les étapes consistant à :

- déterminer un modèle de forme d'onde $\mathcal{M} = (\mu, P, \sigma)$ selon un processus Markovien caché, le modèle comprenant un vecteur $\mu \in \mathbb{R}^K$ représentant un peigne de valeurs, chaque valeur du peigne correspondant à un état de processus, les états de processus étant des valeurs possibles d'un paramètre d'impulsion donné associé auxdites impulsions, une matrice $P$ de transition entre les valeurs consécutives du peigne, la matrice de transition étant de taille $K \times K$, et un vecteur $\sigma \in \mathbb{R}^K$ comprenant un ensemble de coefficients représentant les écarts-types de mesure des états,

et **en ce que** le procédé comprend les étapes consistant à :

- recevoir une suite datée ordonnée dans le temps de $N$ mesures $x_i$ dudit paramètre d'impulsion donné,
- déterminer un score, en parcourant un arbre comprenant un ensemble de branches, lesdites branches comprenant un ensemble de noeuds, chaque noeud de l'arbre correspondant à un desdits états de processus $\mu_k$ et fournissant une prédiction de mesure $(\bar{x}_i)$ dudit paramètre d'impulsion, les branches dudit arbre étant parcourues selon un ordre choisi, l'arbre ayant une profondeur inférieure ou égale à N,
- reconnaître la forme d'onde à partir dudit score,

la détermination d'un score comprenant une ou plusieurs itérations des étapes suivantes, pour chaque noeud parcouru de l'arbre associé à un état de processus $\mu_k$:

- déterminer une prédiction $\hat{x}_i$ du paramètre d'impulsion à partir de la prédiction du paramètre d'impulsion $\hat{x}_{i-1}$ déterminée à l'itération précédente et de l'état de processus $\mu_k$ associé au noeud,
- déterminer si une précondition est vérifiée indiquant que la prédiction $\hat{x}_i$ atteint une impulsion,
- mettre à jour (607) la valeur courante du score, si la précondition est vérifiée, en incrémentant la valeur courante du score $S$ d'une valeur,
- sélectionner la branche suivante à parcourir,

les itérations étant répétées jusqu'à ce qu'une condition d'arrêt soit vérifiée.

2. Procédé selon la revendication 1, **caractérisé en ce qu'**il comprend l'incrémentation d'un compteur de manques si la précondition n'est pas vérifiée.

3. Procédé selon la revendication 2, **caractérisé en ce que** le parcours de l'arbre remonte à un niveau supérieur de l'arbre si le compteur de manques atteint une valeur maximale de manques prédéfinie.

4. Procédé selon l'une des revendications précédentes, dans lequel la précondition est vérifiée si :

$$\min_n \frac{|x_n - \hat{x}_i|}{\sigma_k} \leq t,$$

$\sigma_k$ désignant l'écart-type de mesure du paramètre d'impulsion et t désignant un seuil ajustable.

5. Procédé selon l'une des revendications précédentes, dans lequel le score calculé est la vraisemblance maximale des mesures $x_n$ conditionnellement au modèle $\mathcal{M}$ .

6. Procédé selon l'une des revendications 1 à 4, dans lequel le score est mis à jour à l'étape de mise à jour de score en ajoutant à la valeur courante du score la quantité $\frac{1}{\sigma_k\sqrt{2\pi}} \exp\left(-\min_n \frac{|x_n - \hat{x}_i|^2}{2\sigma_k^2}\right)$ ou la quantité $\exp\left(-\min_n \frac{|x_n - \hat{x}_i|^2}{2\sigma_k^2}\right)$ .

7. Procédé selon l'une des revendications 1 à 5, dans lequel le score est mis à jour en incrémentant la valeur courante du score.

8. Procédé selon l'une des revendications précédentes, dans lequel le procédé comprend un apprentissage dudit modèle à partir de données de référence, les étapes d'apprentissages comprenant les étapes consistant à :

- filtrer les données de référence ;
- déterminer le nombre d'états de processus ;
- déterminer les valeurs des états de processus ;

le nombre d'états de processus et les valeurs des états de processus étant déterminées à partir des données de référence filtrées,
le procédé comprenant en outre la détermination de la matrice de transition $P$ et des écart-types de mesures des états, à partir du nombre d'état de processus et des valeurs des états de processus.

9. Procédé selon la revendication 8, dans lequel les données de référence sont utilisées pour mettre à jour un histogramme représentant en ordonnée le nombre d'impulsions détectées en fonction d'un indice intervalle en abscisses, la largeur d'un intervalle étant égale à une résolution temporelle, et dans lequel :

- le nombre d'états $\mu$ correspond au nombre de composantes connexes de l'histogramme de cardinal au moins égal à une valeur donnée, sur son axe des abscisses, une composante connexe correspondant à un nombre d'intervalles consécutifs contenant un nombre non nul d'impulsions dans l'histogramme, ledit nombre d'intervalles d'une composante connexe définissant le cardinal de la composante connexe, et

- la valeur des états de processus est estimée en déterminant la valeur médiane des centres des intervalles associés chaque composante connexe, chaque valeur médiane fournissant la valeur d'un des $K$ états $\mu_k$ du peigne $\mu$.

**10.** Récepteur de reconnaissance de la forme d'onde d'un signal reçu en provenance d'un émetteur (3), ledit signal comprenant une série d'impulsions électromagnétiques définissant une forme d'onde pseudo-aléatoire du signal, **caractérisé en ce que** le récepteur (2) comprend une unité de reconnaissance de forme d'onde configurée pour :

- déterminer un modèle de forme d'onde $\mathcal{M}$ = ($\mu$, $P$, $\sigma$) selon un processus Markovien caché, le modèle comprenant un vecteur $\mu \in \mathbb{R}^K$ représentant un peigne de valeurs, chaque valeur du peigne correspondant à un état de processus, les états de processus étant des valeurs possibles d'un paramètre d'impulsion donné associé auxdites impulsions, une matrice $P$ de transition entre les valeurs consécutives du peigne, la matrice de transition étant de taille $K \times K$, et un vecteur $\sigma \in \mathbb{R}^K$ $\sigma$ comprenant un ensemble de coefficients représentant les écarts-types de mesure des états,

et **en ce que** l'unité de reconnaissance de forme d'onde est configurée pour :

- recevoir une suite datée ordonnée dans le temps de $N$ mesures $x_i$ dudit paramètre d'impulsion donné,
- déterminer un score, en parcourant un arbre comprenant un ensemble de branches, lesdites branches comprenant un ensemble de noeuds, chaque noeud de l'arbre correspondant à un desdits états de processus $\mu_k$ et fournissant une prédiction de mesure ($\overline{x}_i$) dudit paramètre d'impulsion, les branches dudit arbre étant parcourues selon un ordre choisi, l'arbre ayant une profondeur inférieure ou égale à N,
- reconnaître la forme d'onde à partir dudit score,

la détermination d'un score comprenant une ou plusieurs itérations des étapes suivantes, pour chaque noeud parcouru de l'arbre associé à un état de processus $\mu_k$ :

- déterminer une prédiction $\hat{x}_i$ du paramètre d'impulsion à partir de la prédiction du paramètre d'impulsion $\hat{x}_{i-1}$ déterminée à l'itération précédente et de l'état de processus $\mu_k$ associé au noeud ;
- déterminer si une précondition est vérifiée indiquant que la prédiction $\hat{x}_i$ atteint une impulsion,
- mettre à jour (607) la valeur courante du score, si la précondition est vérifiée, en incrémentant la valeur courante du score S d'une valeur,
- sélectionner la branche suivante à parcourir,

les itérations étant répétées jusqu'à ce qu'une condition d'arrêt soit vérifiée.

[Fig. 1]

**Figure 1**

[Fig. 2]

## Figure 2

[Fig. 3]

## Figure 3

[Fig. 4]

# Figure 4

[Fig. 5]

**10**

UNITE DE RECONNAISSANCE DE FORME D'ONDE (101)

UNITE D'APPRENTISSAGE DE MODELE (102)

## Figure 5

[Fig. 6]

Appliquer des coupures au nœud racine (601)

Parcourir le nœud racine pour initialiser S (602)

Explorer au moins l'une des branches partant du nœud racine (604)

Pour chaque branche parcourue (606)

Mettre à jour S à partir de la prédiction de mesure associé à l'état de processus de la feuille de la branche courante parcourue (607)

Autre branche à parcourir (608)?

Oui

Non

Retourner la valeur du score S (610)

**Figure 6**

[Fig. 7]

**A**

(Start) $\hat{x}_1 = x_1$
$S \leftarrow 0$

$\mu_1$    $\mu_2$    $\cdots$    $\mu_K$

**Figure 7**

[Fig. 8]

**A**

$\mu_k$ $\hat{x}_2 = \hat{x}_1 + \mu_k$

Hit : update score & store pulse
Miss: update counter

$\mu_{\varphi(k,1)}$ $\hat{x}_3 = \hat{x}_2 + \mu_{\varphi(k,1)}$
$k \leftarrow \varphi(k,1)$

$\cdots$    $\mu_{\varphi(k,s_k)}$

**Figure 8**

[Fig. 9]

**Figure 9**

[Fig. 10]

```
┌──────────────────────────────────────────────────────┐
│ Filtrage des données de référence acquises            │
│ (800)                                                  │
└──────────────────────────────────────────────────────┘
                          │
                          ▼
┌──────────────────────────────────────────────────────┐
│ Estimation du nombre d'état (802)                     │
└──────────────────────────────────────────────────────┘
                          │
                          ▼
┌──────────────────────────────────────────────────────┐
│ Estimation des valeurs d'état et des écarts type      │
│ associés S (804)                                       │
└──────────────────────────────────────────────────────┘
                          │
                          ▼
┌──────────────────────────────────────────────────────┐
│ Estimation de la matrice de transition P (806)        │
└──────────────────────────────────────────────────────┘
```

**Figure 10**

[Fig. 11]

Figure 11

[Fig. 12]

**Figure 12**

[Fig. 13]

$$C'1 : pfa=10^{-1}$$
$$C'2 : pfa=5.10^{-2}$$
$$C'3 : pfa=10^{-2}$$
$$C'3 : pfa=5.10^{-3}$$

**Figure 13**

[Fig. 14]

# Figure 14

[Fig. 15]

## Figure 15

[Fig. 16]

## Figure 16

[Fig. 17]

**Figure 17**

[Fig. 18]

**Figure 18**

Europäisches
Patentamt

European
Patent Office

Office européen
des brevets

## RAPPORT DE RECHERCHE EUROPEENNE

Numéro de la demande

EP 24 17 8473

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | KR 101 343 531 B1 (AGENCY DEFENSE DEV [KR]) 20 décembre 2013 (2013-12-20) * le document en entier * ----- | 1-10 | INV. G01S7/02 G01S7/292 |
| A | CN 113 406 574 A (BEIJING INSTITUTE TECH) 17 septembre 2021 (2021-09-17) * le document en entier * ----- | 1-10 | |
| A | ZHU MENGTAO ET AL: "Model-Based Time Series Clustering and Interpulse Modulation Parameter Estimation of Multifunction Radar Pulse Sequences", IEEE TRANSACTIONS ON AEROSPACE AND ELECTRONIC SYSTEMS, IEEE SERVICE CENTER, PISCATAWAY, NJ, US, vol. 57, no. 6, 21 mai 2021 (2021-05-21), pages 3673-3690, XP011891177, ISSN: 0018-9251, DOI: 10.1109/TAES.2021.3082660 [extrait le 2021-12-02] * page 3676, colonne de gauche, lignes 8-28 * * page 3677, colonne de gauche, ligne 15 - colonne de droite, ligne 3 * ----- -/-- | 1-10 | |

DOMAINES TECHNIQUES RECHERCHES (IPC)

G01S

Le présent rapport a été établi pour toutes les revendications

| Lieu de la recherche | Date d'achèvement de la recherche | Examinateur |
|---|---|---|
| Munich | 18 octobre 2024 | Rodríguez González |

EPO FORM 1503 03.82 (P04C02)

page 1 de 2

**Europäisches Patentamt**
**European Patent Office**
**Office européen des brevets**

# RAPPORT DE RECHERCHE EUROPEENNE

Numéro de la demande

EP 24 17 8473

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | LIU ZHANG-MENG: "Online Pulse Deinterleaving With Finite Automata", IEEE TRANSACTIONS ON AEROSPACE AND ELECTRONIC SYSTEMS, IEEE SERVICE CENTER, PISCATAWAY, NJ, US, vol. 56, no. 2, 27 juin 2019 (2019-06-27), pages 1139-1147, XP011783030, ISSN: 0018-9251, DOI: 10.1109/TAES.2019.2925447 [extrait le 2020-04-09] * figures 3, 4 * * page 1141, colonne de droite, lignes 2-29 * * page 1143, colonne de gauche, ligne 13 - colonne de droite, ligne 7 * * page 1143, colonne de droite, ligne 25 - page 1144, colonne de gauche, ligne 4 * ----- | 1-10 | |

**DOMAINES TECHNIQUES RECHERCHES (IPC)**

Le présent rapport a été établi pour toutes les revendications

| Lieu de la recherche | Date d'achèvement de la recherche | Examinateur |
|---|---|---|
| Munich | 18 octobre 2024 | Rodríguez González |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.................................................................
& : membre de la même famille, document correspondant

EPO FORM 1503 03.82 (P04C02)

page 2 de 2

## ANNEXE AU RAPPORT DE RECHERCHE EUROPEENNE
## RELATIF A LA DEMANDE DE BREVET EUROPEEN NO.

EP 24 17 8473

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

18-10-2024

| Document brevet cité au rapport de recherche | Date de publication | Membre(s) de la famille de brevet(s) | Date de publication |
|---|---|---|---|
| KR 101343531 B1 | 20-12-2013 | AUCUN | |
| CN 113406574 A | 17-09-2021 | AUCUN | |

Pour tout renseignement concernant cette annexe : voir Journal Officiel de l'Office européen des brevets, No.12/82

EPO FORM P0460

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5847677 A
- EP 3491411 A
- EP 1947472 A

**Littérature non-brevet citée dans la description**

- **P.M. AASHIR AFNAN. et al.** AI based radar waveform classification system. *International research journal of engineering and technology,* Août 2020, vol. 7 (8), 395-399
- **J. LUNDEN. ; V. KOIVUNEN.** Automatic radar waveform récognition. *IEEE J. selected topics SP,* Juin 2007, vol. 1 (1), 124-136
- **C. TANNER FREDIAU. et al.** Classification of common waveforms including a watchdog for unkown signals. *arXiv [eess.SP]:2108.07339v1.,* Août 2021
- **R.V. CHAKRAVARTHY. et al.** Open-set radar waveform classification: Comparison of different features and classifiers. *IEEE international radar conférence,* 28 Avril 2020
- **W. CHAO et al.** A radar signal deinterleaving method based on semantic segmentation with neural networks. *arXiv [eess.SP]:2110.13706v2,* Février 2022
- **M.MOTTIER, G ; CHARDON, F. PASCAL.** Radar emitter classification with optimal transport distance. *Proc. 30th European signal processing conférence (eusipco).,* 29 Août 2022
- **N. LEVANON. ; E. MOZESON.** Radar signals. Wiley, 2004
- **H.E. ABOU-BAKR-HASSAN ; K.H. MOUSTAFA.** Joint deinterleaving/identification of radar pulses using matrix différences. *Proc. 5th international conférence on electrical engineering (ICEENG).,* 16 Mai 2006
- **P. BREMAUD.** Markov chains, Gibbs fields, Monte-Carlo simulations, and queues. Springer, 1998
- **L.R. RABINER.** A tutorial on hidden Markov models and selected applications in speech récognition. *Proc. of the IEEE,* Février 1989, vol. 77 (2), 257-286
- **A.P. DEMPSTER ; N.M. LAIRD ; D.B. RUBIN.** Maximum Likelihood from Incomplete Data via the EM Algorithm. *Journal of the Royal Statistical Society B,* 1977, vol. 39 (1), 1-38
- **L.R. WELCH.** Hidden Markov Models and the Baum-Welch Algorithm. *IEEE Information Theory Society Newsletter,* Décembre 2003, vol. 53 (4), 10-13